# EUROPEAN PATENT APPLICATION

(11) **EP 4 206 946 A1**
(43) Date of publication of application: **05.07.2023**
(21) Application number: 21874224.5
(22) Date of filing: 13.09.2021
(51) Int. Cl.: G06F 16/245, G06F 11/34

(54) **METHOD FOR OPENING HISTORICAL PAGE, RELATED DEVICE AND COMPUTER STORAGE MEDIUM**

(30) Priority: 30.09.2020 CN 202011065608
(71) Applicant: Huawei Technologies Co., Ltd., Shenzhen, Guangdong 518129 (CN)
(72) Inventor: ZHU, Pei, Shenzhen, Guangdong 518129 (CN); WEN, Ping, Shenzhen, Guangdong 518129 (CN)
(74) Representative: Isarpatent
(86) International application number: PCT/CN2021/117977
(87) International publication number: WO 2022/068563

(57) **Abstract**

This application provides a method for opening a historical page, a related device, and a computer storage medium, to speed up opening of historical pages in different applications, so that the historical pages in the different applications can be opened quickly. The method includes: parsing received historical page information in a remote device to obtain page visit history of at least one application; storing at least one group of page visit history obtained after the page visit history of the at least one application is grouped based on each application; opening a tab corresponding to the at least one group of page visit history in response to a received first instruction for viewing visit history; and opening a first group of page visit history and/or sending a first opening instruction to the remote device in response to a received second instruction that is on the tab and that is used to open the first group of page visit history in the at least one group of page visit history, so that the remote device opens the first group of page visit history.

## Description

### CROSS-REFERENCE TO RELATED APPLICATIONS

This application claims priority to Chinese Patent Application No. 202011065608.4, filed with the China National Intellectual Property Administration on September 30, 2020 and entitled "METHOD FOR OPENING HISTORICAL PAGE, RELATED DEVICE, AND COMPUTER STORAGE MEDIUM", which is incorporated herein by reference in its entirety.

### TECHNICAL FIELD

This application relates to the field of terminal device technologies, and in particular, to a method for opening a historical page, a related device, and a computer storage medium.

### BACKGROUND

At present, most applications on an intelligent terminal provide a history record function, and browsing history of a user accessing these applications can be viewed by using the history record function. However, if the user wants to view browsing history of an application on the intelligent terminal, the user has to open a historical page in the application on the intelligent terminal to search for the browsing history of the application. If the user wants to search for browsing history of another application at this time, the user needs to close the historical page in the application on the intelligent terminal before opening a page in the another application to search for the browsing history.

In conclusion, at present, switching between historical pages in different applications on the intelligent terminal is not convenient, and the historical pages in the different applications cannot be opened quickly. This is not conducive to improving user experience.

### SUMMARY

Embodiments of this application provide a method for opening a historical page, a related device, and a computer storage medium, to speed up opening of historical pages in different applications, so that the historical pages in the different applications can be opened quickly, thereby helping improve user experience.

According to a first aspect, an embodiment of this application provides a method for opening a historical page. The method is applied to a local device, and the method includes: receiving historical page information in a remote device sent by the remote device, and parsing the historical page information to obtain page visit history of at least one application, where the historical page information includes the page visit history of the at least one application on the remote device; further, grouping the page visit history of the at least one application based on each application, to obtain at least one group of page visit history, and storing the at least one group of page visit history, where each group of page visit history includes an opening instruction used to open each piece of page visit history in each group of page visit history; further, receiving a first instruction for viewing visit history, and opening, in response to the first instruction, a tab corresponding to the at least one group of page visit history; and further, receiving a second instruction that is on the tab and that is used to open a first group of page visit history in the at least one group of page visit history, and opening the first group of page visit history and/or sending a first opening instruction to the remote device in response to the second instruction, so that the remote device opens the first group of page visit history according to the first opening instruction.

For example, the local device is a mobile phone, and the remote device is a laptop computer. Generally, a plurality of applications may be installed on the laptop computer. For example, WeChat, iQIYI, and Tencent Video are installed. The mobile phone may obtain historical page information synchronized by the laptop computer, for example, page visit history of at least one application installed on the laptop computer. The mobile phone may further group and store page visit history of these applications based on each application. For example, page visit history corresponding to the application Tencent Video is used as a group of page visit history based on the application Tencent Video, and page visit history corresponding to the application iQIYI is used as a group of page visit history based on the application iQIYI. Each group of page visit history may include an opening instruction used to open each piece of page visit history in each group of page visit history. For example, the opening instruction may include a page thumbnail, a page component name, and the like. For example, by tapping a page thumbnail or a page component name corresponding to the application iQIYI, a user can open page visit history corresponding to the page thumbnail and the page component name. The mobile phone may further receive the first instruction for viewing visit history that may be, for example, an instruction used to open a tab for displaying page visit history. For example, with an operation of pulling down or pulling up a display desktop of the mobile phone performed on the display desktop of the mobile phone, the mobile phone can open the tab in response to the first instruction. The mobile phone may further receive the second instruction that is on the tab and that is used to open the first group of page visit history in the at least one group of page visit history. For example, with a search in the tab for an application name or the like of an application corresponding to the first group of page visit history, the mobile phone can open the first group of page visit history and/or send the first opening instruction to the laptop computer in response to the second instruction. After receiving the first opening instruction, the laptop computer may open the first group of page visit history.

According to the solution provided in this application, historical page information in different applications on the remote device may be synchronized to the local device, so that the local device can quickly access to the historical page information in the different applications on the remote device. The local device may further control the remote device to quickly access to the historical page information in the different applications on the remote device, with no need to perform an operation on the remote device, and with no need to search the different applications on the remote device for historical page information in each of the different applications. This can simplify an operation of a user searching for historical page information in different applications, and speed up opening of different applications, so that pages in the different applications can be opened quickly, thereby helping improve user experience. In addition, because the tab corresponding to the at least one group of page visit history may record page visit history of different applications, a plurality of applications are compatible, and there is no need to rely on a local page visit history function of an application.

With reference to the first aspect, in a possible implementation of the first aspect, after the opening the first group of page visit history and/or sending a first opening instruction to the remote device in response to the second instruction, the method further includes: receiving a third instruction used to open a first piece of page visit history in the first group of page visit history; and opening the first piece of page visit history in response to the third instruction if the first group of page visit history is opened on the local device; or sending the second opening instruction to the remote device in response to the third instruction if the first group of page visit history is opened on the remote device, where the second opening instruction is used to control the remote device to open the first piece of page visit history; or in response to the third instruction, opening the first piece of page visit history on the local device and sending the second opening instruction to the remote device if the first group of page visit history is opened on the local device and the remote device synchronously.

For example, the local device is a mobile phone, and the remote device is a laptop computer. The third instruction may be an operation of, for example, tapping, by a user, on a page thumbnail or a page component name in the first group of page visit history displayed on the tab on the mobile phone. That is, the user may control, through the tab on the mobile phone, to open the first piece of page visit history on the mobile phone and/or the laptop computer.

According to the solution provided in this application, page visit history can be supported to be opened on a single terminal device, or page visit history can be supported to be opened on a plurality of terminal devices, so that a user can be facilitated to select a corresponding terminal device to open page visit history on a target terminal device, thereby achieving the purpose of opening page visit history quickly and helping improve user experience.

With reference to the first aspect, in a possible implementation of the first aspect, the opening the first group of page visit history and/or sending a first opening instruction to the remote device in response to the second instruction includes: in response to the second instruction, displaying, on the tab, a first control used to open the first group of page visit history on the local device, a second control used to open the first group of page visit history on the remote device, and a third control used to open the first group of page visit history on the local device and the remote device synchronously; and opening the first group of page visit history on the local device if a first operation of tapping the first control is received; or sending the first opening instruction to the remote device if a second operation of tapping the second control is received; or opening the first group of page visit history on the local device and the remote device and sending the first opening instruction to the remote device if a third operation of tapping the third control is received.

For example, the local device is a mobile phone, and the remote device is a laptop computer. If a user searches the tab for the application name or the like of the application corresponding to the first group of page visit history, prompt information, for example, "Select a device to open", may be displayed on the tab on the mobile phone. The prompt information may include the first control, for example, "This device", the second control, "Laptop computer", and the third control, "Mobile phone and laptop computer". The user may select, by tapping a corresponding control, a device for opening the first group of page visit history.

According to the solution provided in this application, different page visit history can be supported to be opened on a single terminal device, or different page visit history can be supported to be opened on a plurality of terminal devices synchronously, so that a user can be facilitated to select a corresponding terminal device to open at least one piece of page visit history on a target terminal device, thereby achieving the purpose of opening page visit history quickly and helping improve user experience.

With reference to the first aspect, in a possible implementation of the first aspect, after the storing the at least one group of page visit history, the method further includes: determining whether storage space currently used to store the at least one group of page visit history has reached a preset threshold; and deleting at least one piece of earliest page visit history from the at least one group of page visit history when the storage space has reached the preset threshold.

For example, the local device is a mobile phone, and the remote device is a laptop computer. A user may set, in the mobile phone, a preset threshold of a size of the storage space used for page visit history on the laptop computer. For example, the preset threshold may be set to 30 M, so as to avoid that an excessively large size of the storage space affects normal running of the mobile phone, and when the size of the storage space reaches the preset threshold, the at least one piece of earliest page visit history can be automatically deleted without a manual operation of the user

According to the solution provided in this application, the storage space in the local device for storing the page visit history on the remote device can be reduced, and freshness of page visit history on the remote device that is stored in the local device can be further ensured.

With reference to the first aspect, in a possible implementation of the first aspect, the storing the at least one group of page visit history includes: storing at least one piece of page visit history in the at least one group of page visit history, where the at least one piece of page visit history is page visit history in the at least one group of page visit history, and a duration interval between a time of the page visit history and a current time is less than or equal to preset duration and/or a time of the page visit history is within a preset time.

For example, the local device is a mobile phone, and the remote device is a laptop computer. When the laptop computer runs each application, one group of page visit history corresponding to each application may include a plurality of pieces of page visit history, and a size of storage space corresponding to the plurality of pieces of page visit history may exceed a preset threshold, so that it is inconvenient for the mobile phone to store the page visit history of the application installed on the laptop computer. A user can set the mobile phone to storing page visit history within a specific period or on a specific date. The mobile phone may store corresponding page visit history based on the period or the date.

According to the solution provided in this application, requirements of different users for viewing page visit history on the remote device corresponding to different periods can be satisfied, to facilitate the users to view corresponding page visit history. A personalized requirement of a user can be satisfied, helping improve user experience.

With reference to the first aspect, in a possible implementation of the first aspect, a first preset operation is performed on the tab to switch between groups of page visit history in the at least one group of page visit history, and the first preset operation includes at least a left/right flick operation; and if a second group of page visit history in the at least one group of page visit history is currently displayed on the tab, a second preset operation is performed on the tab to switch between pieces of page visit history in the second group of page visit history, and the second preset operation includes at least an up/down flick operation.

For example, the local device is a mobile phone, and the remote device is a laptop computer. A user may leftward/rightward flick a tab on the mobile phone, or perform another operation (for example, press a volume button "+" or "-") to switch from the tab to display a different group of page visit history, that is, switch between page visit history of different applications. The user may further flick up/down the tab or perform another operation to switch between pieces of page visit history in the second group of page visit history currently displayed on the tab for display.

According to the solution provided in this application, switching between page visit history of different applications and viewing each piece of page visit history of different applications are supported, to facilitate a user to view the page visit history of the different applications, thereby helping improve user experience.

With reference to the first aspect, in a possible implementation of the first aspect, before the opening the first group of page visit history and/or sending a first opening instruction to the remote device in response to the second instruction, the method further includes: determining that a first application corresponding to the first group of page visit history is not installed on the local device; outputting first prompt information, used to prompt the local device that the first application needs to be installed, where the first prompt information includes an installation instruction; and in response to the installation instruction, starting to install the first application on the local device.

For example, the local device is a mobile phone, and the remote device is a laptop computer. An application installed on the mobile phone may be different from an application installed on the laptop computer. The first application corresponding to the first group of page visit history may not be included in an application currently installed on the mobile phone. In this case, the mobile phone may display the first prompt information, to prompt a user that the first application needs to be installed on the mobile phone. The first prompt information may display content "Do you want to install the first application now?", a control "No", and a control "Yes" . When the user triggers the control "Yes", the mobile phone may start to install the first application. The user may alternatively decline to install the first application on the mobile phone by triggering the control "No".

According to the solution provided in this application, when that the first application is not installed on the local device is determined, the local device is prompted to install the first application, so that the local device can be supported to open page visit history of the first application, thereby achieving the purpose of opening the page visit history quickly and helping improve user experience.

With reference to the first aspect, in a possible implementation of the first aspect, the first opening instruction may include a minimum set of information required for opening the first group of page visit history, and the second opening instruction may include a minimum set of information required for opening the first piece of page visit history. To be specific, the mobile phone may open the first group of page visit history by using the minimum set of information required for opening the first group of page visit history, and may open the first piece of page visit history by using the minimum set of information required for opening the first piece of page visit history.

According to a second aspect, an embodiment of this application further provides a method for opening a historical page. The method is applied to a remote device, and the method includes: grouping and storing, based on each application, historical page information of at least one application historically opened on the remote device, to obtain at least one group of page visit history, where the historical page information includes page visit history of the at least one application on the remote device, and each group of page visit history includes an opening instruction used to open each piece of page visit history in each group of page visit history; and further, synchronizing the historical page information to a local device, so that the local device obtains the at least one group of page visit history after parsing the historical page information, and opens any one group of page visit history in the at least one group of page visit history according to a corresponding instruction.

For example, the remote device is a laptop computer, and the local device is a mobile phone. The laptop computer may further group and store the page visit history of these installed applications based on each application. For example, page visit history corresponding to the application Tencent Video is used as a group of page visit history based on the application Tencent Video, and page visit history corresponding to the application iQIYI is used as a group of page visit history based on the application iQIYI. Each group of page visit history may include the opening instruction used to open each piece of page visit history in each group of page visit history. For example, the opening instruction may include a page thumbnail, a page component name, and the like. For example, by tapping a page thumbnail or a page component name corresponding to the application iQIYI, a user can open page visit history corresponding to the page thumbnail and the page component name. The page visit history of these applications installed on the laptop computer may be synchronized to the mobile phone, so that the page visit history of these applications may be opened by using the mobile phone.

According to the solution provided in this application, historical page information in different applications on the remote device is recorded and synchronized to the connected local device, so that the local device can quickly access to the historical page information in the different applications on the remote device. The local device may further control the remote device to quickly access to the historical page information in the different applications on the remote device, with no need to perform an operation on the remote device, and with no need to search the different applications on the remote device for historical page information in each of the different applications. This can simplify an operation of a user searching for historical page information in different applications, and speed up opening of historical pages in different applications, so that the historical pages in the different applications can be opened quickly, thereby helping improve user experience.

With reference to the second aspect, in a possible implementation of the second aspect, before the grouping and storing, based on each application, historical page information of at least one application historically opened on the remote device, to obtain at least one group of page visit history, the method further includes: generating one start activity instruction each time a new page in one application in the at least one application is opened, where page information of the new page is carried in the start activity instruction, and the page information of the new page includes an application name, a page component name, an additional parameter, and a page thumbnail that correspond to the new page; and storing the page information of the new page based on the application and according to the start activity instruction, to obtain a group of page visit history.

For example, the remote device is a laptop computer, and the local device is a mobile phone. For example, when the laptop computer opens Tencent Video, a homepage in the application Tencent Video may be entered first. The homepage information may include a page thumbnail of the homepage, an application name "Tencent Video" of the application Tencent Video, and a page component name (including the application name of the application Tencent Video, a name of the homepage, and the like), and an additional parameter may include a URL address corresponding to the homepage. A user may enter a new page in the application Tencent Video, that is, a featured page, by tapping a control "Featured" displayed in the homepage. The featured page information may include a page thumbnail of the featured page, the application name "Tencent Video" of the application Tencent Video, and a page component name (including the application name of the application Tencent Video, a name of the featured page, and the like), and an additional parameter may include a URL address corresponding to the featured page. The laptop computer may store, based on the application Tencent Video, page information corresponding to the application Tencent Video as a group of page visit history.

According to the solution provided in this application, the remote device can be facilitated to manage page visit history of different applications, and further, the local device can be facilitated to subsequently synchronize the page visit history on the remote device.

With reference to the second aspect, in a possible implementation of the second aspect, after the synchronizing the historical page information to a local device, the method further includes: receiving a first opening instruction sent by the local device; and parsing the first opening instruction, and opening a first group of page visit history in the at least one group of page visit history according to the parsed first opening instruction.

For example, the remote device is a laptop computer, and the local device is a mobile phone. A user may control the mobile phone to send the first opening instruction to the laptop computer, to control the laptop computer to open the first group of page visit history, for example, to open the first group of page visit history of an application corresponding to the first group of page visit history.

According to the solution provided in this application, the local device can be supported to control the remote device to quickly access to page visit history of different applications on the remote device, with no operation needed to be performed on the remote device. This can speed up opening of historical pages in the different applications, so that the historical pages in the different applications can be opened quickly, thereby helping improve user experience.

With reference to the second aspect, in a possible implementation of the second aspect, after the receiving a first opening instruction sent by the local device, the method further includes: receiving a second opening instruction sent by the local device; and parsing the second opening instruction, and opening a first piece of page visit history in the first group of page visit history according to the parsed second opening instruction.

For example, the remote device is a laptop computer, and the local device is a mobile phone. A user may control the mobile phone to send the second opening instruction to the laptop computer, to control the laptop computer to open the first piece of page visit history in the first group of page visit history, for example, to open the first piece of page visit history of the application corresponding to the first group of page visit history.

According to the solution provided in this application, the local device can be supported to control the remote device to quickly access to page visit history of different applications on the remote device, with no operation needed to be performed on the remote device. This can speed up opening of historical pages in the different applications, so that the historical pages in the different applications can be opened quickly, thereby helping improve user experience.

With reference to the second aspect, in a possible implementation of the second aspect, the opening a first group of page visit history in the at least one group of page visit history according to the parsed first opening instruction includes: opening, according to the parsed first opening instruction, the first group of page visit history in a start activity manner, to update changed content of the first group of page visit history after the first group of page visit history is opened, where the changed content of the first group of page visit history includes at least one deleted and/or added piece of page visit history in the first group of page visit history.

For example, the remote device is a laptop computer. After the laptop computer opens the first group of page visit history, if a user enters a new page, one or more pieces of page visit history are added to the first group of page visit history. If the user does not need a specific piece of page visit history, the user can delete the page visit history from the first group of page visit history.

According to the solution provided in this application, the first group of page visit history is updated in the start activity manner based on access of the remote device to a new page after the first opening instruction is received, so that a phenomenon that a part of page visit history on the remote device is missed can be avoided, thereby helping improve user experience.

With reference to the second aspect, in a possible implementation of the second aspect, the opening a first piece of page visit history in the first group of page visit history according to the parsed second opening instruction includes: opening, according to the parsed second opening instruction, the first piece of page visit history in a start activity manner, to update changed content information in the first group of page visit history after the first piece of page visit history is opened, where the changed content information in the first group of page visit history includes at least one added piece of page visit history in the first group of page visit history or content information corresponding to at least one refreshed piece of page visit history in the first group of page visit history.

For example, the remote device is a laptop computer. For example, after the laptop computer opens a piece of page visit history of an application, if a progress corresponding to the page visit history is not completed, the progress of the page visit history may continue to be completed, to refresh content information in the page visit history. Alternatively, a user may tap a corresponding control in a display interface corresponding to the page visit history, to enter a new page, for example, enter a setting page by tapping a control" Settings", and add page visit history corresponding to the new page to a group of page visit history corresponding to the application.

According to the solution provided in this application, the first group of page visit history is updated in the start activity manner based on access of the remote device to a new page or continuous performing of non-completed content information in the first piece of page visit history after the second opening instruction is received, so that a phenomenon that a part of page visit history on the remote device is missed can be avoided, thereby helping improve user experience.

With reference to the second aspect, in a possible implementation of the second aspect, the first opening instruction may include a minimum set of information required for opening the first group of page visit history, and the second opening instruction may include a minimum set of information required for opening the first piece of page visit history. To be specific, the laptop computer may open the first group of page visit history by using the minimum set of information required for opening the first group of page visit history, and may open the first piece of page visit history by using the minimum set of information required for opening the first piece of page visit history.

According to a third aspect, an embodiment of this application further provides a local device, including:
one or more processors; and
one or more memories, where
the one or more memories store one or more computer programs, the one or more computer programs include instructions, and when the instructions are executed by the one or more processors, the local device is enabled to perform the following steps:
   receiving historical page information in a remote device sent by the remote device, and parsing the historical page information to obtain page visit history of at least one application, where the historical page information includes the page visit history of the at least one application on the remote device;
   grouping the page visit history of the at least one application based on each application, to obtain at least one group of page visit history, and storing the at least one group of page visit history, where each group of page visit history includes an opening instruction used to open each piece of page visit history in each group of page visit history;
   receiving a first instruction for viewing visit history, and opening, in response to the first instruction, a tab corresponding to the at least one group of page visit history; and
   receiving a second instruction that is on the tab and that is used to open a first group of page visit history in the at least one group of page visit history, and opening the first group of page visit history and/or sending a first opening instruction to the remote device in response to the second instruction, so that the remote device opens the first group of page visit history according to the first opening instruction.

With reference to the third aspect, in a possible implementation of the third aspect, when the instructions are executed by the one or more processors, the local device is enabled to specifically perform the following steps:
receiving a third instruction used to open a first piece of page visit history in the first group of page visit history; and
opening the first piece of page visit history in response to the third instruction if the first group of page visit history is opened on the local device; or
sending the second opening instruction to the remote device in response to the third instruction if the first group of page visit history is opened on the remote device, where the second opening instruction is used to control the remote device to open the first piece of page visit history; or
in response to the third instruction, opening the first piece of page visit history on a local device and sending the second opening instruction to the remote device if the first group of page visit history is opened on the local device and the remote device synchronously.

With reference to the third aspect, in a possible implementation of the third aspect, when the instructions are executed by the one or more processors, the local device is enabled to specifically perform the following steps:
in response to the second instruction, displaying, on the tab, a first control used to open the first group of page visit history on the local device, a second control used to open the first group of page visit history on the remote device, and a third control used to open the first group of page visit history on the local device and the remote device synchronously; and
opening the first group of page visit history on the local device if a first operation of tapping the first control is received; or
sending the first opening instruction to the remote device if a second operation of tapping the second control is received; or
opening the first group of page visit history on the local device and the remote device and sending the first opening instruction to the remote device if a third operation of tapping the third control is received.

With reference to the third aspect, in a possible implementation of the third aspect, when the instructions are executed by the one or more processors, the local device is enabled to specifically perform the following steps:
determining whether storage space currently used to store the at least one group of page visit history has reached a preset threshold; and
deleting at least one piece of earliest page visit history from the at least one group of page visit history when the storage space has reached the preset threshold.

With reference to the third aspect, in a possible implementation of the third aspect, when the instructions are executed by the one or more processors, the local device is enabled to specifically perform the following steps:
storing at least one piece of page visit history in the at least one group of page visit history, where the at least one piece of page visit history is page visit history in the at least one group of page visit history, and a duration interval between a time of the page visit history and a current time is less than or equal to preset duration and/or a time of the page visit history is within a preset time.

With reference to the third aspect, in a possible implementation of the third aspect, when the instructions are executed by the one or more processors, the local device is enabled to specifically perform the following steps:
performing a first preset operation on the tab to switch between groups of page visit history in the at least one group of page visit history; and
if a second group of page visit history in the at least one group of page visit history is currently displayed on the tab, performing a second preset operation on the tab to switch between pieces of page visit history in the second group of page visit history.

With reference to the third aspect, in a possible implementation of the third aspect, when the instructions are executed by the one or more processors, the local device is enabled to specifically perform the following steps:
determining that a first application corresponding to the first group of page visit history is not installed on the local device;
outputting first prompt information, used to prompt the local device that the first application needs to be installed, where the first prompt information includes an installation instruction; and
in response to the installation instruction, starting to install the first application on the local device.

With reference to the third aspect, in a possible implementation of the third aspect, the first opening instruction may include a minimum set of information required for opening the first group of page visit history, and the second opening instruction includes a minimum set of information required for opening the first piece of page visit history.

According to a fourth aspect, an embodiment of this application further provides a remote device, including:
one or more processors; and
one or more memories, where
the one or more memories store one or more computer programs, the one or more computer programs include instructions, and when the instructions are executed by the one or more processors, the remote device is enabled to perform the following steps:
   grouping and storing, based on each application, historical page information of at least one application historically opened on the remote device, to obtain at least one group of page visit history, where the historical page information includes page visit history of the at least one application on the remote device, and each group of page visit history includes an opening instruction used to open each piece of page visit history in each group of page visit history; and
   synchronizing the historical page information to a local device, so that the local device obtains the at least one group of page visit history after parsing the historical page information, and opens any one group of page visit history in the at least one group of page visit history according to a corresponding instruction.

With reference to the fourth aspect, in a possible implementation of the fourth aspect, when the instructions are executed by the one or more processors, the remote device is enabled to specifically perform the following steps:
generating one start activity instruction each time a new page in one application in the at least one application is opened, where page information of the new page is carried in the start activity instruction, and the page information of the new page includes an application name, a page component name, an additional parameter, and a page thumbnail that correspond to the new page; and storing the page information of the new page based on the application and according to the start activity instruction, to obtain a group of page visit history.

With reference to the fourth aspect, in a possible implementation of the fourth aspect, when the instructions are executed by the one or more processors, the remote device is enabled to specifically perform the following steps:
receiving a first opening instruction sent by the local device; and
parsing the first opening instruction, and opening a first group of page visit history in the at least one group of page visit history according to the parsed first opening instruction.

With reference to the fourth aspect, in a possible implementation of the fourth aspect, when the instructions are executed by the one or more processors, the remote device is enabled to specifically perform the following steps:
receiving a second opening instruction sent by the local device; and
parsing the second opening instruction, and opening a first piece of page visit history in the first group of page visit history according to the parsed second opening instruction.

With reference to the fourth aspect, in a possible implementation of the fourth aspect, when the instructions are executed by the one or more processors, the remote device is enabled to specifically perform the following steps:
opening, according to the parsed first opening instruction, the first group of page visit history in a start activity manner, to update changed content of the first group of page visit history after the first group of page visit history is opened, where the changed content of the first group of page visit history includes at least one deleted and/or added piece of page visit history in the first group of page visit history.

With reference to the fourth aspect, in a possible implementation of the fourth aspect, when the instructions are executed by the one or more processors, the remote device is enabled to specifically perform the following steps:
opening, according to the parsed second opening instruction, the first piece of page visit history in a start activity manner, to update changed content information in the first group of page visit history after the first piece of page visit history is opened, where the changed content information in the first group of page visit history includes at least one added piece of page visit history in the first group of page visit history or content information corresponding to at least one refreshed piece of page visit history in the first group of page visit history.

With reference to the fourth aspect, in a possible implementation of the fourth aspect, the first opening instruction may include a minimum set of information required for opening the first group of page visit history, and the second opening instruction may include a minimum set of information required for opening the first piece of page visit history.

According to a fifth aspect, an embodiment of this application further provides a terminal device. The terminal device includes a module/unit for performing the method in the first aspect or any one of the possible designs of the first aspect; or the terminal device includes a module/unit for performing the method in the second aspect or any one of the possible designs of the second aspect. These modules/units may be implemented by hardware, or may be implemented by hardware executing corresponding software.

According to a sixth aspect, an embodiment of this application further provides a terminal device. The terminal device includes one or more processors, and one or more memories or non-volatile storage media. The one or more processors are connected to the one or more memories or non-volatile storage media. The one or more memories or non-volatile storage media store one or more computer instructions or computer programs. When the one or more processors execute the one or more computer instructions or computer programs, the terminal device is enabled to perform the method in the second aspect or any one of the possible designs of the second aspect.

According to a seventh aspect, an embodiment of this application further provides a chip. The chip is coupled to a memory in a terminal device, and is configured to invoke a computer program stored in the memory and perform the technical solution in the first aspect and any one of the possible designs of the first aspect of embodiments of this application; or configured to: invoke a computer program stored in the memory and perform the technical solution in the second aspect and any one of the possible designs of the second aspect of embodiments of this application. In embodiments of this application, "coupled" means that two components are directly or indirectly combined with each other.

According to an eighth aspect, an embodiment of this application further provides a computer-readable storage medium or a non-volatile storage medium. The computer-readable storage medium or the non-volatile storage medium stores computer instructions or a computer program. When the computer instructions or the computer program is invoked by a computer, the computer is enabled to perform the method according to any one of the first aspect or the second aspect. When the computer instructions or the computer program is run on one or more processors, a local device including the one or more processors is enabled to perform the method according to the first aspect, or a remote device including the one or more processors is enabled to perform the method according to the second aspect.

According to a ninth aspect, an embodiment of this application further provides a computer program product. The computer program product is configured to store a computer program. When the computer program is run on a computer, the computer is enabled to perform the method according to any one of the first aspect or the second aspect.

According to a tenth aspect, a graphical user interface on a terminal device is further provided. The terminal device has a display, one or more memories, and one or more processors. The one or more processors are configured to execute one or more computer programs stored in the one or more memories. The graphical user interface includes a graphical user interface displayed when the terminal device performs the method according to the first aspect or the method according to the second aspect.

According to an eleventh aspect, an embodiment of this application provides a multi-device linkage system. The multi-device linkage system includes a plurality of terminal devices. The plurality of terminal devices include a terminal device used as a local device and a terminal device used as a remote device. The terminal device used as a local device is configured to perform the steps performed by the local device in the first aspect or the solutions provided in embodiments of this application. The terminal device used as a remote device is configured to perform the steps performed by the remote device in the second aspect or the solutions provided in embodiments of this application.

For beneficial effects of the third aspect to the eleventh aspect, refer to the beneficial effects of the first aspect and the second aspect. Details are not described again.

### BRIEF DESCRIPTION OF DRAWINGS

FIG. 1 is a schematic diagram of an architecture of a multi-device linkage system according to an embodiment of this application;
FIG. 2 is a schematic diagram of a process of linkage between a local device and a remote device according to an embodiment of this application;
FIG. 3 is a schematic diagram of a structure of a mobile phone according to an embodiment of this application;
FIG. 4 is a schematic diagram of a structure of a mobile phone according to an embodiment of this application;
FIG. 5 is a schematic flowchart of a method for opening a historical page according to an embodiment of this application;
FIG. 6 is a schematic diagram of a tab on a local device according to an embodiment of this application;
FIG. 7A and FIG. 7B are a schematic diagram of switching between groups of page visit history by using a tab according to an embodiment of this application;
FIG. 8 is a schematic diagram of a tab on a local device according to an embodiment of this application;
FIG. 9 is a schematic diagram of a tab on a local device according to an embodiment of this application;
FIG. 10 is a schematic diagram of switching between recently played songs by using a tab according to an embodiment of this application;
FIG. 11 is a schematic flowchart of a method for opening a historical page according to an embodiment of this application;
FIG. 12(a) to FIG. 12(c) are a schematic diagram of a process in which a remote device records different page visit history according to an embodiment of this application;
FIG. 13 is a schematic diagram of a structure of a local device according to an embodiment of this application; and
FIG. 14 is a schematic diagram of a structure of a remote device according to an embodiment of this application.

### DESCRIPTION OF EMBODIMENTS

To make the purpose, technical solutions, and advantages of this application clearer, the technical solutions of embodiments of this application are described below with reference to the accompanying drawings of embodiments of this application.

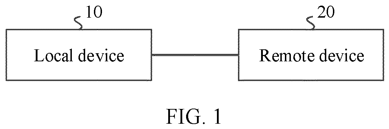

FIG. 1 is a schematic diagram of an architecture of a multi-device linkage system according to an embodiment of this application. The system may include a plurality of terminal devices. Some terminal devices may be used as local devices, and another terminal device may be used as a remote device. It should be understood that, in actual application, any one of the plurality of terminal devices may be used as a local device and/or a remote device based on different requirements. In FIG. 1, for example, the plurality of terminal devices include a local device 10 and a remote device 20.

It should be understood that the local device 10 in this embodiment of this application may also be referred to as user equipment (user equipment, UE), for example, a smartphone, a tablet computer, a laptop computer, a television, various wearable devices, a Bluetooth speaker, a vehicle-mounted device, and a computer. An example embodiment of a portable device includes but is not limited to a portable device using iOS^{®}, Android^{®}, Microsoft^{®}, or another operating system. The portable device may alternatively be another portable device. A specific form of the local device 10 is not limited in this embodiment of this application.

It should be understood that the remote device 20 in this embodiment of this application may also be referred to as user equipment (user equipment, UE), for example, a smartphone, a tablet computer, a laptop computer, a television, various wearable devices, a Bluetooth speaker, a vehicle-mounted device, and a computer. An example embodiment of a portable device includes but is not limited to a portable device using iOS^{®}, Android^{®}, Microsoft^{®}, or another operating system. The portable device may alternatively be another portable device. A specific form of the remote device 20 is not limited in this embodiment of this application.

It should be understood that, in this embodiment of this application, the local device 10 and the remote device 20 may be a same type of terminal devices, or may be different types of terminal devices. This is not limited in this embodiment of this application.

It should be understood that, in this embodiment of this application, the local device 10 and the remote device 20 may directly communicate with each other, or may communicate with each other through forwarding by another device. This is not specifically limited in this embodiment of this application.

The remote device 20 may group and store, based on each application, historical page information of at least one application historically opened on the remote device 20, to obtain at least one group of page visit history. The historical page information includes page visit history of the at least one application on the remote device 20, and each group of page visit history may include an opening instruction used to open each piece of page visit history in each group of page visit history. Further, the remote device 20 may further synchronize the historical page information to the local device 10.

The local device 10 may receive the historical page information in the remote device 20 sent by the remote device 20, and parse the historical page information to obtain the page visit history of the at least one application. Further, the local device 10 may further group the page visit history of the at least one application based on each application, to obtain at least one group of page visit history, and store the at least one group of page visit history. Further, the local device 10 may further receive a first instruction for viewing visit history, and open a tab corresponding to the at least one group of page visit history in response to the first instruction. Further, the local device 10 may further receive a second instruction that is on the tab and that is used to open a first group of page visit history in the at least one group of page visit history, and in response to the second instruction, open the first group of page visit history and/or send a first opening instruction to the remote device 20.

The remote device 20 may further receive the first opening instruction sent by the local device 10. Further, the remote device 20 may further open the first group of page visit history according to the first opening instruction.

In this embodiment of this application, historical page information in different applications on the remote device is recorded and synchronized to the connected local device, so that the local device can quickly access to the historical page information in the different applications on the remote device. The local device may further control the remote device to quickly access to the historical page information in the different applications on the remote device, with no need to perform an operation on the remote device, and with no need to search the different applications on the remote device for historical page information in each of the different applications. This can simplify an operation of a user searching for historical page information in different applications, and speed up opening of historical pages in different applications, so that the historical pages in the different applications can be opened quickly, thereby helping improve user experience.

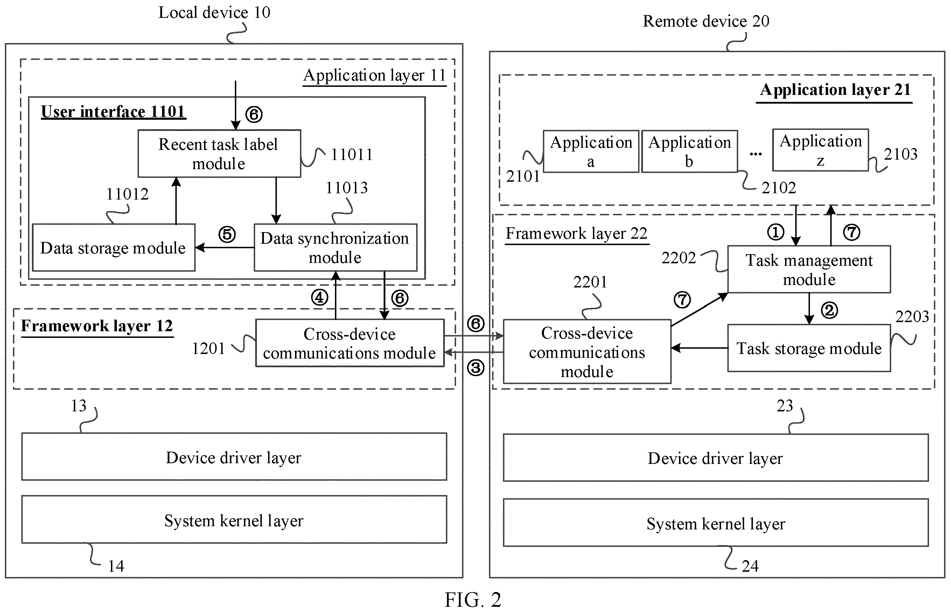

A process of linkage between the local device 10 and the remote device 20 with reference to FIG. 1 and FIG. 2 is described in detail below.

As shown in FIG. 2, the local device 10 may include an application layer 11, a framework layer 12, a device driver layer 13, and a system kernel layer 14. In the application layer 11, a user interface (user interface, UI) 1101 may be included, and in the user interface 1101, a recent task label module 11011, a data storage module 11012, and a data synchronization module 11013 may be included. In the framework layer 12, a cross-device communications module 1201 may be included.

The recent task label module 11011 may be configured to provide a service of searching for historical page information synchronized by the remote device 20 to the local device 10. The data storage module 11012 may be configured to store the historical page information on the remote device 20. The data synchronization module 11013 may be configured to synchronize historical page information on the remote device 20, and may send, to the remote device 20, by using the cross-device communications module 1201, an opening instruction for opening the historical page information. The cross-device communications module 1201 may be configured to support communication between the local device 10 and the remote device 20. The device driver layer 13 may be configured to support hardware of the local device 10 in working. The system kernel layer 14 may be configured to manage a system process, an internal memory, a device driver, a file, a network system, and the like on the local device 10.

In some embodiments, the local device 10 may receive, by using the cross-device communications module 1201, the historical page information in the remote device 20 sent by the remote device 20, as shown in step ③ in FIG. 2. The local device 10 may parse the historical page information by using the data synchronization module 11013 to obtain the page visit history of the at least one application, as shown in step ④ in FIG. 2. The local device 10 may synchronize the page visit history of the at least one application by using the data synchronization module 11013, and may send, to the remote device 20, by using the cross-device communications module 1201, an opening instruction used to open the page visit history of the at least one application, as shown in step 60 in FIG. 2. The local device 10 may group, by using the data synchronization module 11013, the page visit history of the at least one application based on each application, to obtain the at least one group of page visit history, and store the at least one group of page visit history by using the data storage module 11012, as shown in step ⑤ in FIG. 2. The local device 10 may further receive, by using the cross-device communications module 1201, the first instruction for viewing visit history, and open the tab corresponding to the at least one group of page visit history in response to the first instruction by using the recent task label module 11011, as shown in step 60 in FIG. 2. The local device 10 may further receive, by using the cross-device communications module 1201, the second instruction that is on the tab and that is used to open the first group of page visit history in the at least one group of page visit history, and in response to the second instruction, open the first group of page visit history by using the recent task label module 11011 and/or send the first opening instruction to the remote device 20 by using the cross-device communications module 1201, as shown in step 60 in FIG. 2.

The remote device 20 may include an application layer 21, a framework layer 22, a device driver layer 23, and a system kernel layer 24. In the application layer 21, a plurality of applications may be included, for example, an application a (the application a is identified by 2101 in FIG. 2), an application b (the application b is identified by 2102 in FIG. 2), and an application z (the application z is identified by 2103 in FIG. 2) that are shown in FIG. 2. In the framework layer 22, a cross-device communications module 2201, a task management module 2202, and a task storage module 2203 may be included.

The cross-device communications module 2201 may be configured to support communication between the remote device 20 and the local device 10. The task management module 2202 may be configured to: record the historical page information in the remote device 20, and store, in the task storage module 2203, page visit history obtained by the different applications in the application layer 21. The task storage module 2203 is configured to group and store the page visit history of the different applications based on each application. The device driver layer 23 may be configured to support hardware of the remote device 20 in working. The system kernel layer 24 may be configured to manage a system process, an internal memory, a device driver, a file, a network system, and the like on the remote device 20.

In some embodiments, the remote device 20 may group and store, based on each application, by using the task management module 2202, the historical page information of at least one application historically opened on the remote device 20, to obtain at least one group of page visit history, as shown in step ① in FIG. 2. The historical page information includes the page visit history of the at least one application on the remote device 20, and each group of page visit history may include the opening instruction for opening each piece of page visit history in each group of page visit history. The remote device 20 may further store the page visit history of the at least one application by using the task storage module 2203, as shown in step ② in FIG. 2. The remote device 20 may further synchronize the historical page information to the local device 10 by using the cross-device communications module 2201, as shown in step (3) in FIG. 2. The remote device 20 may further receive, by using the cross-device communications module 2201, the first opening instruction sent by the local device 10, as shown in step ⑥ in FIG. 2. The remote device 20 may further open the first group of page visit history according to the first opening instruction by using the task management module 2202, as shown in step ⑦ in FIG. 2.

The cross-device communications module 1201 may communicate with the cross-device communications module 2201 via Bluetooth, Wi-Fi, or another communications protocol. This is not limited in this embodiment of this application.

In this embodiment of this application, with different structures of the local device and the remote device, historical page information in different applications on the remote device can be synchronized to the local device, so that the local device can quickly access to the historical page information in the different applications on the remote device. The local device may further control the remote device to quickly access to the historical page information in the different applications on the remote device, with no need to perform an operation on the remote device, and with no need to search the different applications on the remote device for historical page information in each of the different applications. This can simplify an operation of a user searching for historical page information in different applications, and speed up opening of historical pages in different applications, so that the historical pages in the different applications can be opened quickly, thereby helping improve user experience.

An example in which the local device is a mobile phone is used below to describe a function of each structure of the type of mobile phone that can be implemented in embodiments of this application.

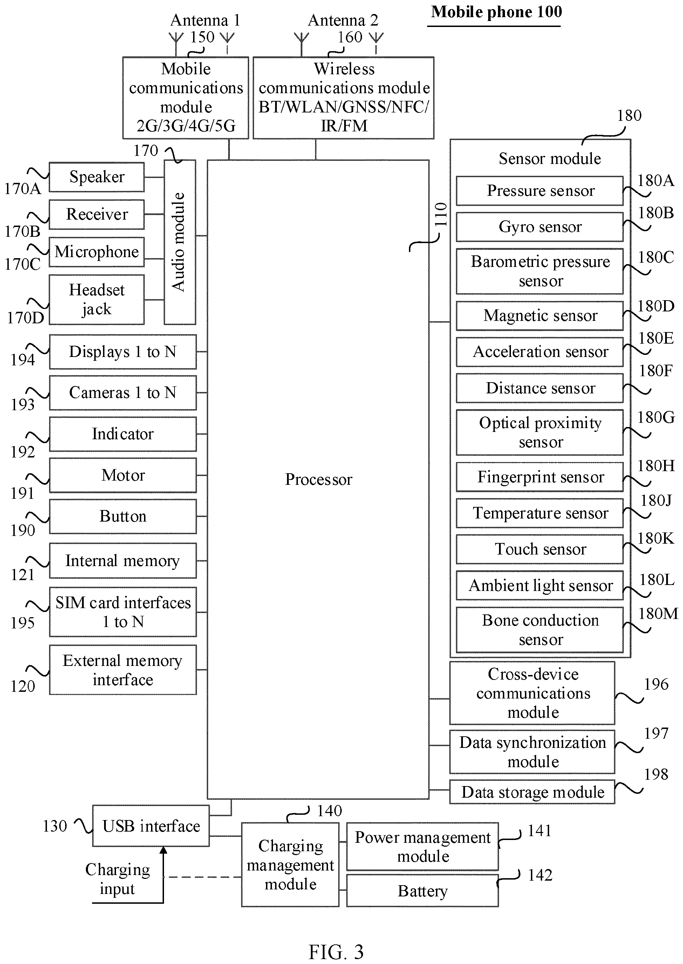

As shown in FIG. 3, a mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, a cross-device communications module 196, a data synchronization module 197, a data storage module 198, and the like. The sensor module 180 may include a fingerprint sensor 180A, a touch sensor 180B, and the like. A type of and a quantity of sensors are not limited herein.

The processor 110 may include one or more processing units. For example, the processor 110 may include an application processor (application processor, AP), a modem processor, a graphics processing unit (graphics processing unit, GPU), an image signal processor (image signal processor, ISP), a memory, a video codec, a digital signal processor (digital signal processor, DSP), a baseband processor, a neural-network processing unit (neural-network processing unit, NPU), a central processing unit (central processing unit, CPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data that has just been used or is cyclically used by the processor 110. If the processor 110 needs to use the instructions or the data again, the processor may directly invoke the instructions or the data from the memory. This avoids repeated access, reduces a time for waiting of the processor 110, and improves system efficiency.

The processor 110 may run software code/a module for the method for opening a historical page provided in embodiments of this application, to open page visit history on a remote device by using the mobile phone 100 or the remote device. A specific process is described in detail below.

The USB interface 130 is an interface that conforms to a USB standard specification, and may be specifically a mini USB interface, a micro USB interface, a USB Type C interface, or the like. The USB interface 130 may be used to connect a charger to charge the mobile phone 100, or may be used to transmit data between the mobile phone 100 and a peripheral device.

The charging management module 140 is configured to receive a charging input from a charger. The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communications module 160, and the like.

A wireless communications function of the mobile phone 100 may be implemented by using the antenna 1, the antenna 2, the mobile communications module 150, the wireless communications module 160, the cross-device communications module 196, the modem processor, the baseband processor, and the like. The antenna 1 and the antenna 2 are used to transmit and receive an electromagnetic wave signal. Each antenna in the mobile phone 100 may be used to cover one or more communications frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a wireless communications solution including 2G/3G/4G/5G that is applied to the mobile phone 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least a part of functional modules of the mobile communications module 150 may be disposed in the processor 110. In some embodiments, at least a part of functional modules of the mobile communications module 150 and at least a part of modules of the processor 110 may be disposed in a same component.

The wireless communications module 160 may provide a wireless communications solution that is applied to the mobile phone 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 160 may be one or more components integrating at least one communications processor module. The wireless communications module 160 receives an electromagnetic wave through the antenna 2, performs frequency modulation and filtering on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

The cross-device communications module 196 is configured to receive page visit history sent by the remote device. The page visit history may include page visit history corresponding to each of at least one application on the remote device. The page visit history may be sent by the remote device in response to synchronization request information after the mobile phone 100 sends the synchronization request information to the remote device by using the cross-device communications module 196 every other periodicity or when a connection to the remote device is determined, or may be sent by the remote device automatically to the mobile phone 100 every other periodicity or when a connection to the mobile phone 100 is determined and received by the mobile phone 100 by using the cross-device communications module 196. This is not limited in this embodiment of this application.

In some embodiments, in the mobile phone 100, the antenna 1 and the mobile communications module 150 are coupled, the antenna 2 and the wireless communications module 160 are coupled, and the antenna 1 and the cross-device communications module 196 are coupled, or the antenna 2 and the cross-device communications module 196 are coupled, so that the mobile phone 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The display 194 is configured to display a display interface of an application and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a Mini-LED, a Micro-LED, a Micro-OLED, a quantum dot light-emitting diode (quantum dot light-emitting diode, QLED), and the like. In some embodiments, the mobile phone 100 may include one or N displays 194, where N is a positive integer greater than 1.

The camera 193 is configured to capture a static image or a video, and may include a front-facing camera and a rear-facing camera.

The internal memory 121 may be configured to store computer-executable program code. The executable program code includes instructions. The processor 110 runs the instructions stored in the internal memory 121, to perform various function applications and data processing on the mobile phone 100. The internal memory 121 may include a program storage area and a data storage area. The program storage area may store an operating system, software code of at least one application (for example, the application iQIYI and the application WeChat), and the like. The data storage area may store data (for example, an image or a video) generated in a process of using the mobile phone 100, and the like. In addition, the internal memory 121 may include a high-speed random access memory, and may further include a non-volatile memory, for example, at least one magnetic disk storage device, a flash component, or a universal flash storage (universal flash storage, UFS). In this embodiment of this application, the internal memory 121 may store the software code/module for the method for opening a historical page provided in this embodiment of this application. When running the software code/module, the processor 110 may perform a procedure of the method for opening a historical page, to achieve the purpose of opening page visit history of an application quickly.

The external memory interface 120 may be used to connect an external storage card, for example, a micro SD card, to extend a storage capability of the mobile phone 100. The external storage card communicates with the processor 110 through the external memory interface 120, to implement a data storage function. For example, files such as images and videos are stored in the external storage card. Clearly, the software code/module for the method for opening a historical page provided in this embodiment of this application may alternatively be stored in an external memory. The processor 110 may run the software code/module through the external memory interface 120, to perform the procedure of the method for opening a historical page, so as to achieve the purpose of opening page visit history of an application quickly.

The mobile phone 100 may implement an audio function, for example, music play or recording, by using the audio module 170, the speaker 170A, the receiver 170B, the microphone 170C, the headset jack 170D, the application processor, and the like.

The fingerprint sensor 180A is configured to acquire a fingerprint. The mobile phone 100 may use a feature of the acquired fingerprint to implement fingerprint-based unlocking, application lock access, fingerprint-based photographing, fingerprint-based call answering, and the like. The touch sensor 180B is also referred to as a "touch panel". The touch sensor 180B may be disposed on the display 194. The touch sensor 180B and the display 194 form a touchscreen, which is also referred to as a "touch screen". The touch sensor 180B is configured to detect a touch operation performed on or near the touch sensor. The touch sensor 108B may transfer a detected touch operation to the application processor to determine a type of the touch event. A visual output related to the touch operation may be provided through the display 194. In some other embodiments, the touch sensor 180B may alternatively be disposed on a surface of the mobile phone 100 at a location different from that of the display 194.

Clearly, the sensor module 180 may further include a pressure sensor, a gyro sensor, a barometric pressure sensor, a magnetic sensor, an acceleration sensor, a distance sensor, an optical proximity sensor, an ambient light sensor, a bone conduction sensor, and the like. A category of and a type of the sensor are not limited herein in this embodiment of this application.

The button 190 includes a power button, a volume button, and the like. The button 190 may be a mechanical button, or may be a touch button. The mobile phone 100 may receive a button input, and generate a keying signal input related to user settings and function control on the mobile phone 100.

The motor 191 may generate a vibration prompt. The motor 191 may be configured to produce an incoming call vibration prompt, and may be configured to provide touch vibration feedback. For example, touch operations performed in different applications (for example, taking a picture and playing audio) may correspond to different vibration feedback effects.

The indicator 192 may be an indicator light, and may be configured to indicate a charging status and a power change, or may be configured to indicate a message, a missed call, a notification, and the like.

The SIM card interface 195 is used to connect a SIM card. The SIM card may be inserted into the SIM card interface 195 or removed from the SIM card interface 195, to implement contact with or separation from the mobile phone 100.

The data synchronization module 197 is configured to synchronize the page visit history on the remote device, and send, to the remote device by using the cross-device communications module 196, an opening instruction used to open the page visit history on the remote device.

The data storage module 198 is configured to store the page visit history on the remote device. It should be understood that one or more pieces of page visit history mentioned below may be stored in the data storage module 198. In some embodiments, the data block storage module 197 may be integrated into the internal memory 120 or an external memory, or may be independent of the internal memory 120 or the external memory.

It may be understood that the components shown in FIG. 3 do not constitute a specific limitation on the structure of the mobile phone 100. The mobile phone 100 may further include more or fewer components than those shown in the figure, or combine some components, or split some components, or have different component arrangements.

In some embodiments, the remote device may alternatively be a mobile phone. An example in which the remote device is a mobile phone is used below to describe a function of each structure of the type of mobile phone that can be implemented in embodiments of this application.

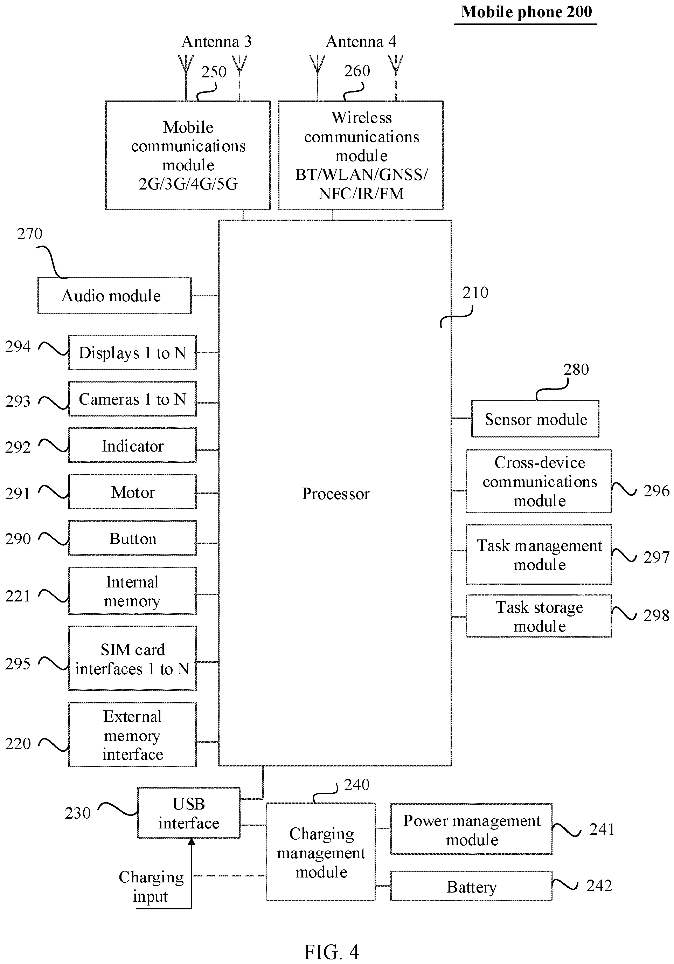

As shown in FIG. 4, a mobile phone 200 may include a processor 210, an external memory interface 220, an internal memory 221, a USB interface 230, a charging management module 240, a power management module 241, a battery 242, an antenna 3, an antenna 4, a mobile communications module 250, a wireless communications module 260, and an audio module 270, a sensor module 280, a button 290, a motor 291, an indicator 292, a camera 293, a display 294, a SIM card interface 295, a cross-device communications module 296, a task management 297, a task storage module 298, and the like. A structure of the audio module 270 shown in FIG. 4 may be the same as or similar to that of the audio module 170 shown in FIG. 3, and a structure of the sensor module 280 shown in FIG. 4 may be the same as or similar to that of the audio module 180 shown in FIG. 3. Details are not described herein again. Details are not described herein again.

In addition to the cross-device communications module 296, the task management module 297, and the task storage module 298, another structural function of the mobile phone 200 may be the same as or similar to each corresponding structural function shown in FIG. 3. Details are not described herein again.

A wireless communications function of the mobile phone 200 may be implemented by using the antenna 3, the antenna 4, the mobile communications module 250, the wireless communications module 260, the cross-device communications module 296, the modem processor, the baseband processor, and the like.

The cross-device communications module 296 is configured to synchronize historical page information of an application on the mobile phone 200 to a local device. The historical page information may include page visit history corresponding to each of at least one application on the mobile phone 200. The mobile phone 200 may send, by using the cross-device communications module 296, the historical page information to the local device every other periodicity or after that synchronization request information sent by the local device is received is determined, or the mobile phone 200 sends the historical page information to the local device automatically when a connection to the local device is determined. This is not limited in this embodiment of this application.

In some embodiments, in the mobile phone 200, the antenna 3 and the mobile communications module 250 are coupled, the antenna 4 and the wireless communications module 260 are coupled, and the antenna 3 and the cross-device communications module 396 are coupled, or the antenna 4 and the cross-device communications module 296 are coupled, so that the mobile phone 200 can communicate with a network and another device by using a wireless communications technology. The wireless communications technology used in the mobile phone 200 may be the same as the wireless communications technology used in the mobile phone 100 shown in FIG. 3. Details are not described herein again.

In this embodiment of this application, the internal memory 221 may store the software code/module for the method for opening a historical page provided in this embodiment of this application. When running the software code/module, the processor 210 may perform a procedure of the method for opening a historical page, to achieve the purpose of opening page visit history of an application quickly.

Clearly, the software code/module for the method for opening a historical page provided in this embodiment of this application may alternatively be stored in an external memory. The processor 210 may run the software code/module through the external memory interface 220, to perform the procedure of the method for opening a historical page, so as to achieve the purpose of opening page visit history of an application quickly.

The task management module 297 is configured to: record the historical page information on the mobile phone 200, and store, in the task storage module 298, page visit history obtained by the different applications in the mobile phone 200. In response to an opening instruction sent by the local device, and corresponding page visit history is opened.

The task storage module 298 is configured to group and store page visit history of different applications based on each application. In some embodiments, the task block storage module 298 may be integrated into the internal memory 220 or an external memory, or may be independent of the internal memory 220 or the external memory.

It may be understood that the components shown in FIG. 4 do not constitute a specific limitation on the structure of the mobile phone 200. The mobile phone 200 may further include more or fewer components than those shown in the figure, or combine some components, or split some components, or have different component arrangements.

It should be understood that when the mobile phone 100 in FIG. 3 is used as a remote device, the mobile phone 100 may further include a task management module and a task storage module. The data storage module 198 and the task storage module may be a same module, or may be different modules. This is not limited in this application. Alternatively, when the mobile phone 200 in FIG. 4 is used as a local device, the mobile phone 200 may further include a data synchronization module and a data storage module. The task storage module 298 and the data storage module may be a same module, or may be different modules. This is not limited in this application.

The technical solutions provided in embodiments of this application are described below in detail with reference to the accompanying drawings.

Before embodiments of this application are described, some terms used in this application are described and explained first, to help a person skilled in the art have a better understanding.

Various applications (application, app for short) may be installed on the local device and the remote device in embodiments of this application. An app is a software program that can implement one or more specific functions, for example, a camera application, a text message application, a multimedia message application, various email applications, WeChat (WeChat), Tencent instant messaging software (QQ), WhatsApp Messenger, Line (Line), a photo sharing application (Instagram), KakaoTalk, and DingTalk. An application mentioned below may be a default application installed on a terminal device, or may be an application downloaded from a network or obtained by a user from another terminal device (for example, an application sent by another terminal device) in a process of using the terminal device. This is not specifically limited in this embodiment of this application.

Terms used in the following embodiments are merely intended to describe particular embodiments, but are not intended to limit this application. As used in the description and the appended claims of this application, the terms "one", "a", "the", "this" of singular forms are intended to further include expressions such as "one or more", unless otherwise specified in the context clearly. It should be further understood that, in embodiments of this application, "one or more" means one, two, or more; and "and/or" describes an association relationship between associated objects, and represents that three relationships may exist. For example, A and/or B may represent a case in which only A exists, both A and B exist, or only B exists, where A and B may be singular or plural. The character "/" usually indicates an "or" relationship between associated objects. It should be further understood that, in embodiments of this application, terms such as "first" to "sixth" are merely used for distinguishing in descriptions, but should not be understood as indicating or implying relative importance, or should not be understood as indicating or implying a sequence.

Reference to "an embodiment", "some embodiments", or the like described in this specification indicates that one or more embodiments of this application includes/include a specific feature, structure, or characteristic described with reference to those embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise particularly emphasized in another manner. The terms "include", "have", and their variants all mean "include but are not limited to", unless otherwise particularly emphasized in another manner.

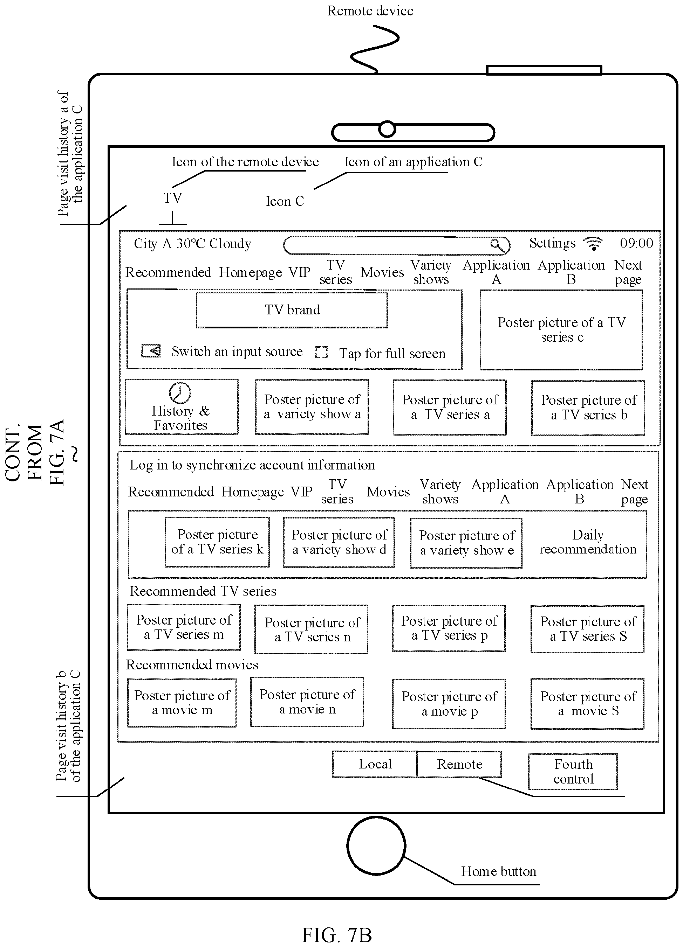

With reference to FIG. 1 to FIG. 7A and FIG. 7B, the method for opening a historical page provided in embodiments of this application is described in detail below.

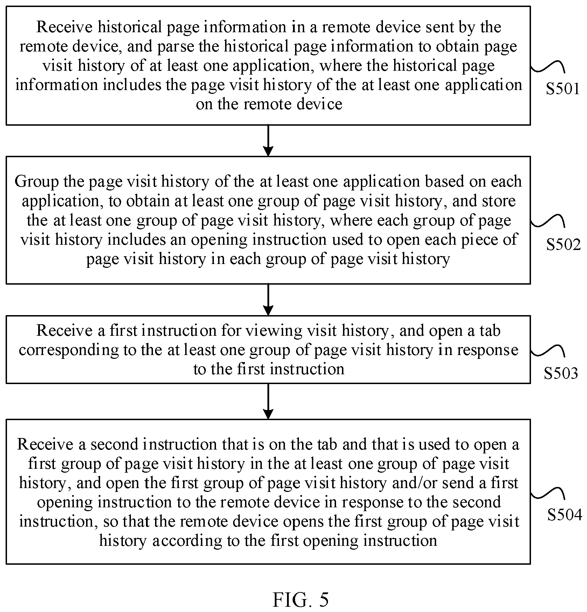

For example, FIG. 5 is a schematic diagram of a structure of a method for opening a historical page according to an embodiment of this application. The method may be applied to a local device. As shown in FIG. 5, the method may include the following steps.

S501: Receive historical page information in a remote device sent by the remote device, and parse the historical page information to obtain page visit history of at least one application, where the historical page information includes the page visit history of the at least one application on the remote device.

In some embodiments, when the local device is communicatively connected to the remote device, the local device may send synchronization request information to the remote device. The synchronization request information is used to request the remote device to synchronize page visit history of different applications that is stored in the remote device to the local device. Clearly, the local device may alternatively send the synchronization request information to the remote device periodically based on first preset duration, or the local device sends the synchronization request information to the remote device when receiving a control that is triggered by a user to send the synchronization request information to the remote device. Then, the local device may receive the historical page information in the remote device sent by the remote device in response to the synchronization request information. The first preset duration may be set based on an actual requirement. This is not specifically limited in this embodiment of this application. For example, with reference to FIG. 2 and FIG. 3, the local device may obtain the synchronization request information by using a data synchronization module, and send the synchronization request information to the remote device by using a cross-device communications module.

In some other embodiments, the local device may alternatively wait for the remote device to actively send the historical page information in the remote device. For example, when establishing the communications connection to the local device, the remote device may automatically send the historical page information in the remote device to the local device, or may send the historical page information in the remote device to the local device periodically based on second preset duration. The second preset duration may be set based on an actual requirement. This is not specifically limited in this embodiment of this application. For example, with reference to FIG. 2 and FIG. 4, the remote device may send the historical page information in the remote device to the local device by using a cross-device communications module.

In this embodiment of this application, the local device sends the synchronization request information to the remote device periodically based on the first preset duration, or the remote device sends the historical page information on the remote device to the local device periodically based on the second preset duration, to refresh the historical page information from the remote device stored in the local device, so that freshness of the historical page information on the remote device that is stored in the local device can be ensured, thereby helping improve user experience.

In this embodiment of this application, the historical page information on the remote device may be synchronized to the local device in a plurality of manners, so that the historical page information on the remote device can be conveniently synchronized to the local device, thereby helping improve user experience.

In some embodiments, when receiving the historical page information on the remote device, the local device may parse the historical page information on the remote device to obtain the page visit history of the at least one application. In a process of specific implementation, with reference to FIG. 2 and FIG. 3, the local device may parse the obtained historical page information on the remote device by using the data synchronization module, to obtain the page visit history of the at least one application. The page visit history of the at least one application may include an application name, a page component name, additional data, a thumbnail, and the like.

S502: Group the page visit history of the at least one application based on each application, to obtain at least one group of page visit history, and store the at least one group of page visit history, where each group of page visit history includes an opening instruction used to open each piece of page visit history in each group of page visit history.

In some embodiments, the opening instruction used to open each piece of page visit history in each group of page visit history may include an application name, a page component name, and the like of an application corresponding to each piece of page visit history.

In some embodiments, after the local device parses the historical page information on the remote device to obtain the page visit history of the at least one application, the local device may group the page visit history of the at least one application based on each application, to obtain at least one group of page visit history, and store the at least one group of page visit history. For example, with reference to FIG. 2 and FIG. 3, the local device may store the at least one group of page visit history in the data storage module. In this process, the local device may further notify a recent task label module to refresh content in a user interface based on the at least one group of page visit history.

In a process of specific implementation, the local device may store the at least one group of page visit history in a plurality of manners. For example:
In an example 1, the local device may determine whether storage space currently used to store the at least one group of page visit history has reached a preset threshold. When determining that the storage space has reached the preset threshold, the local device may delete at least one piece of earliest page visit history from the at least one group of page visit history.

For example, the preset threshold may be set to be equal to 30 M. If the storage space used by the local device to store the page visit history on the remote device has reached the preset threshold, a corresponding piece of earliest page visit history in currently stored page visit history may be deleted.

In the example 1, to save the storage space, the local device may synchronously store, by default, page visit history corresponding to a current date and a date closest to the current date respectively in the at least one group of page visit history.

In the example 1, a size of the storage space used by the local device to store the at least one group of page visit history may be set based on an actual requirement. For example, a user may manually configure the size of the storage space in a setting interface on the local device based on an actual requirement.

In the example 1, the storage space in the local device for storing the page visit history on the remote device can be reduced, and freshness of page visit history on the remote device that is stored in the local device can be further ensured.

In an example 2, the local device may store at least one piece of page visit history in the at least one group of page visit history. The at least one piece of page visit history is page visit history in the at least one group of page visit history, and a duration interval between a time of the page visit history and a current time is less than or equal to preset duration and/or a time of the page visit history within a preset time.

For example, clearly, the preset duration may also be set based on an actual requirement. For example, a user may configure the preset duration in the setting interface on the local device based on an actual requirement.

In the example 2, the preset time may be a time or a date specified by the user, or may be a time interval between two dates that is specified by the user. This is not specifically limited in this embodiment of this application. The user may configure the preset time in the setting interface on the local device based on an actual requirement, may set the preset time with a touch control in prompt information output by the local device after the local device obtains the at least one group of page visit history, or the like. This is not specifically limited in this embodiment of this application.

In the example 2, requirements of different users for viewing page visit history on the remote device corresponding to different periods can be satisfied, to facilitate the users to view corresponding page visit history. A personalized requirement of a user can be satisfied, helping improve user experience.

S503: Receive a first instruction for viewing visit history, and open, in response to the first instruction, a tab corresponding to the at least one group of page visit history.

In some embodiments, the first instruction may be an operation, detected by the local device, of flicking up/down on a display interface on the local device, an operation, detected by the local device, that triggers a control used to open the tab corresponding to the page visit history, or the like. The first instruction is not specifically limited in this embodiment of this application, provided that the local device can open the tab in response to the first instruction.

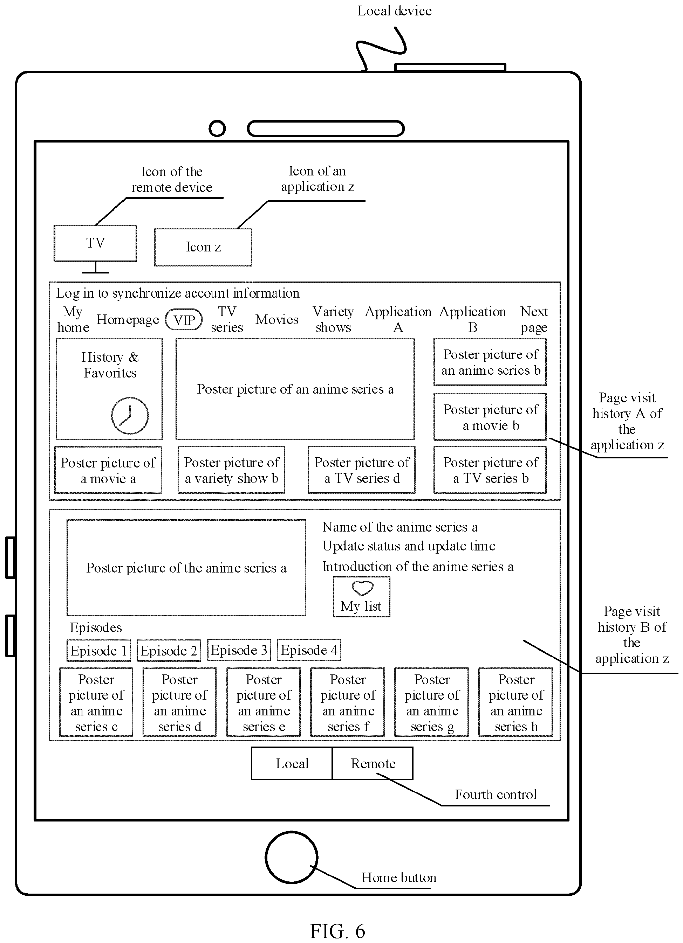

In some embodiments, the tab may include a fourth control, and the fourth control may be used to switch between displaying, on the tab, the page visit history on the local device and the page visit history on the remote device. For example, as shown in FIG. 6, a user may tap a right part (that is, a gray part) of the fourth control, to display the page visit history on the remote device on the tab. The user may tap a left part of the fourth control to display the page visit history on the local device on the tab (not shown in FIG. 6).

In embodiments of this application, page visit history of different applications is recorded by using a tab, so that a plurality of applications are compatible, and there is no need to rely on a local page visit history function of an application.

In embodiments of this application, the fourth control is used to control to display the page visit history on the remote device or the page visit history on the local device on the tab on the local device, so that a user can be facilitated to view page visit history on different devices. Further, the purpose of opening page visit history quickly can be achieved, thereby helping improve user experience.

In some embodiments, the first preset operation is performed on the tab, so that switching between groups of page visit history in the at least one group of page visit history can be performed. The first preset operation may include at least a left/right flick operation, or touching and holding a volume button "+" or "-", or the like. This is not specifically limited in this embodiment of this application.

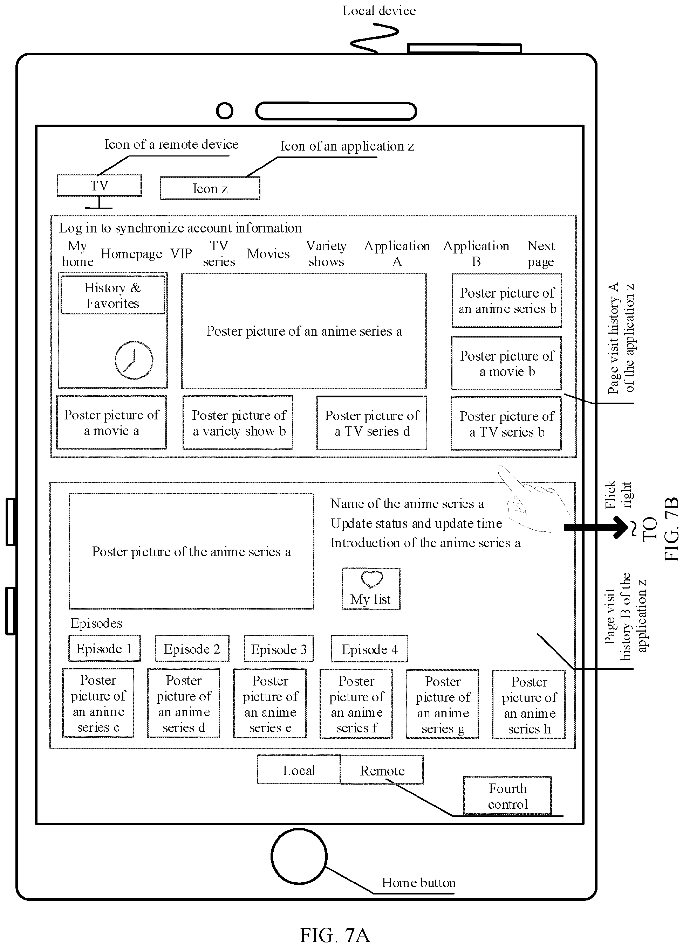

In a process of specific implementation, on the tab, page visit history of each application may be displayed by using an independent list window. The list window may display an icon of a terminal device and an application icon of an application that correspond to page visit history currently displayed on the tab. For example, as shown in FIG. 6, FIG. 7A, and FIG. 7B, the terminal device and the application that correspond to the page visit history currently displayed on the tab are a television and an application z. In this case, an icon of the television and an icon of the application z may be displayed in an upper left part of a current display interface for the tab. By flicking the tab leftward/rightward, the currently displayed page visit history corresponding to the application z may be switched to page visit history of another application for display. For example, as shown in FIG. 7A and FIG. 7B, the page visit history of the application z may be switched to page visit history of an application C by flicking the tab to the right.

In some embodiments, if a second group of page visit history in the at least one group of page visit history is currently displayed on the tab, a second preset operation may be performed on the tab to switch between pieces of page visit history in the second group of page visit history. The second preset operation may include at least an up/down flick operation, tapping a display of the local device, touching a home button of the local device, or the like. This is not specifically limited in this embodiment of this application.

For example, as shown in FIG. 6, an application corresponding to the second group of page visit history is the application z. The tab may be flicked up/down to switch between pieces of page visit history corresponding to the application z.

In this embodiment of this application, the tab corresponding to the page visit history may support switching between page visit history of different applications, so that a user can be facilitated to view the page visit history of the different applications and view each piece of page visit history of the different applications. Further, the purpose of opening visit history of the different applications quickly can be achieved, thereby helping improve user experience.

S504: Receive a second instruction that is on the tab and that is used to open a first group of page visit history in the at least one group of page visit history, and open the first group of page visit history and/or send a first opening instruction to the remote device in response to the second instruction, so that the remote device opens the first group of page visit history according to the first opening instruction.

In some embodiments, the second instruction may be an operation, detected by the local device, of tapping a thumbnail of the first group of page visit history. When receiving the second instruction, the local device may open the first group of page visit history, and/or send the first opening instruction to the remote device, to control the remote device to open the first group of page visit history.

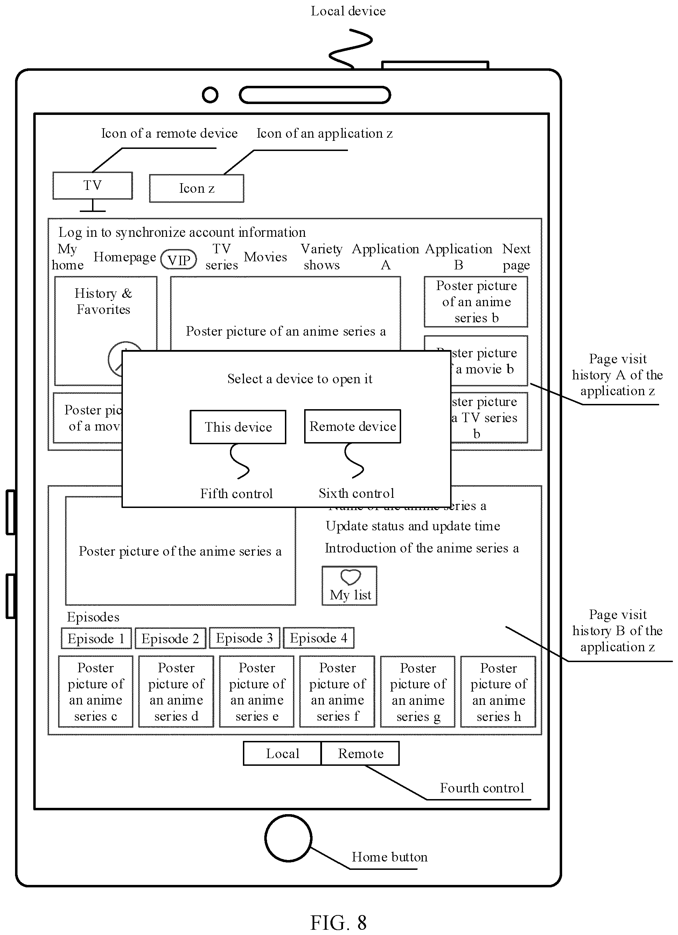

In some embodiments, the page visit history displayed on the tab may be supported to be opened on the local device or the remote device. For example, with reference to FIG. 6 and FIG. 8, the page visit history corresponding to the application z is the first group of page visit history. In this case, a first application is the application z. When a current user taps a thumbnail of a poster picture of an anime series a in page visit history A in the application z, the local device may display, in a display interface for the tab, second prompt information for opening the page visit history A. The second prompt information may include a fifth control and a sixth control. When the user taps the fifth control, the page visit history A may be opened on the local device. If determining that the application z is not currently installed, the local device outputs first prompt information, to prompt the local device that the application z needs to be installed. The first prompt information may include an installation instruction. For example, the first prompt information may display content "Do you want to install the first application now?", a control "No", and a control "Yes". When detecting that the control "Yes" is triggered, in response to the installation instruction, the local device starts to install the application z on the local device. When the user taps the sixth control, the page visit history A may be opened on the remote device. In a process of specific implementation, when a communications connection between the remote device and the local device is disconnected, a color of a select box corresponding to the fifth control is gray or another color, indicating that no communications connection is currently established between the local device and the remote device.

In this embodiment of this application, when that the first application is not installed on the local device is determined, the local device is prompted to install the first application, so that the local device can be supported to open page visit history of the first application, thereby achieving the purpose of opening the page visit history quickly and helping improve user experience.

In a process of specific implementation, when the remote device is selected to open the first group of page visit history, the local device may regenerate the first opening instruction based on page information in the first group of page visit history. The first opening instruction may include a minimum set of information required for opening the first group of page visit history. For example, with reference to FIG. 6 and FIG. 8, a data format of the first opening instruction may include the minimum set that can be used to open the page visit history of the application z, for example, an application name, a page component name, and a page open mode, while a thumbnail included in the page visit history may be discarded. Optionally, an additional parameter may include at least a uniform resource locator (uniform resource locator URL) address of a historical page, and the page open mode may include page open modes such as single-instance, multi-instance, floating window display, and full-screen display. That the application z is the application Bilibili (that may be identified by using bili) and the page visit history A are used as examples. For example, the first opening instruction may be represented in a format (a data exchange format) JSON (short for the English term JavaScript Object Notation) as follows:

```
           {"packagename": "tv.danmaku.bili", //application package name
             "activities": {
                      "name": " tv.danmaku.bili.A (reference sign
of the name of the component for the page visit
                      history A in Bilibili)", //page component name
                      "flag": "normal", //page open mode
                      "data": "url:.....", //page additional data
                                  },
 }
```

}In some other embodiments, the page visit history displayed on the tab may alternatively be supported to be opened on the local device and the remote device. For example, the local device may display, in response to the second instruction, on the tab corresponding to the page visit history, a first control used to open the first group of page visit history on the local device, a second control used to open the first group of page visit history on the remote device, and a third control used to open the first group of page visit history on the local device and the remote device synchronously. The first group of page visit history is opened on the local device if a first operation of tapping the first control is received. Alternatively, the first opening instruction is sent to the remote device if a second operation of tapping the second control is received. Alternatively, the first group of page visit history is opened on the local device and the remote device and the first opening instruction is sent to the remote device if a third operation of tapping the third control is received. For example, when receiving the second instruction, the local device may output third prompt information. The third prompt information may include the first control to the third control. The first group of page visit history may be opened on the local device if the local device receives the first operation of tapping the first control. Alternatively, the first group of page visit history may be opened on the remote device if the local device receives the second operation of tapping the second control. Alternatively, the first group of page visit history may be opened on the local device and the remote device if the local device receives the third operation of tapping the third control.

In this embodiment of this application, page visit history can be supported to be opened on a single terminal device, or page visit history can be supported to be opened on a plurality of terminal devices, so that a user can be facilitated to select a corresponding terminal device to open page visit history on a target terminal device, thereby achieving the purpose of opening page visit history quickly and helping improve user experience.

In some embodiments, after opening the first group of page visit history, the local device may further open a first piece of page visit history in the first group of page visit history. For example, when the local device receives a third instruction used to open the first piece of page visit history, if the first group of page visit history is opened on the local device, the first piece of page visit history may be opened on the local device in response to the third instruction. Alternatively, if the first group of page visit history is opened on the remote device, a second opening instruction may be sent to the remote device in response to the third instruction. The second opening instruction is used to control the remote device to open the first piece of page visit history. Alternatively, if the first group of page visit history is opened on the local device and the remote device synchronously, the first piece of page visit history may be opened on the local device and a second opening instruction may be sent to the remote device in response to the third instruction. The second opening instruction may include a minimum set of information required for opening the first piece of page visit history, and a format of the minimum set of information may be the same as or similar to the format of the first opening instruction. This is not limited in this embodiment of this application.

For example, as shown in FIG. 6, the page visit history corresponding to the application z is the first group of page visit history, and two pieces of page visit history in the first group of page visit history are currently displayed on the tab. When a user taps any thumbnail in page visit history B or any display area in the page visit history B, the second instruction may be generated. When the first group of page visit history is opened on the local device, the local device may open the page visit history B in the application z in response to the second instruction. When the first group of page visit history is opened on the remote device, the local device may send the second opening instruction to the remote device in response to the second instruction, to control the remote device to open the page visit history B in the application z. Alternatively, when the first group of page visit history is opened on the remote device and the remote device synchronously, the local device may open the page visit history B in the application z and send the second opening instruction to the remote device in response to the second instruction.

In this embodiment of this application, different page visit history can be supported to be opened on a single terminal device, or different page visit history can be supported to be opened on a plurality of terminal devices synchronously, so that a user can be facilitated to select a corresponding terminal device to open at least one piece of page visit history on a target terminal device, thereby achieving the purpose of opening page visit history quickly and helping improve user experience.

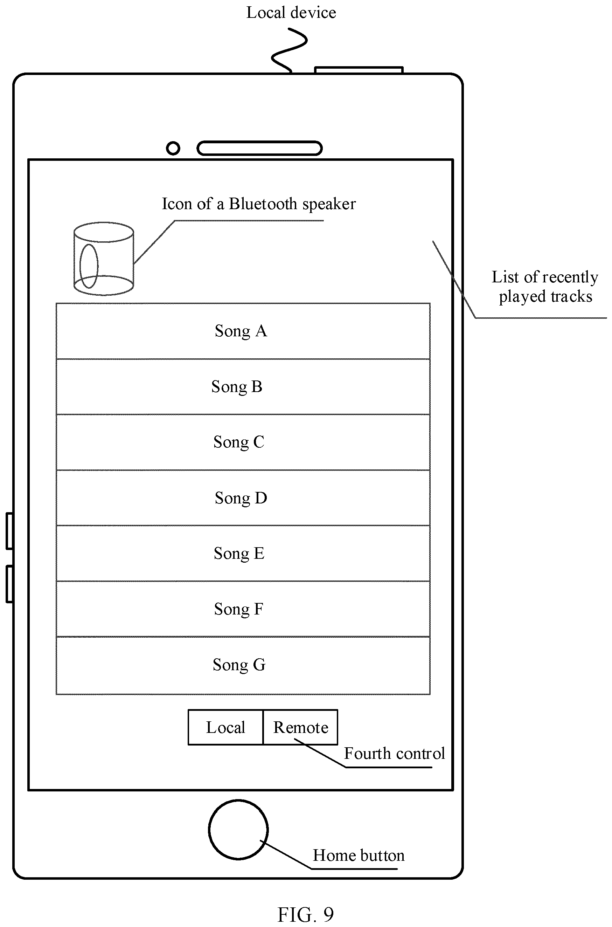

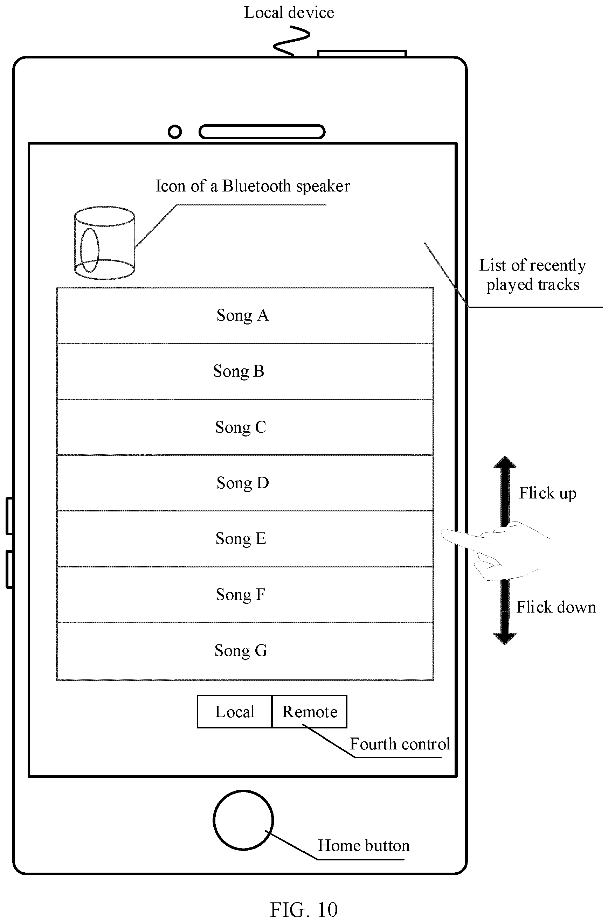

It should be noted that, when the remote device is a Bluetooth speaker, on a tab that is used by the local device to open page visit history, a list of tracks recently played by the Bluetooth speaker and an icon of the Bluetooth speaker may be displayed, as shown in FIG. 9. For the Bluetooth speaker, because applications are not distinguished, the tab may be flicked up/down to switch between tracks in the track list for display, as shown in FIG. 10. For a process of linkage between the local device and the Bluetooth speaker, refer to foregoing related descriptions of the process of linkage between the local device and the remote device. Details are not described herein again.

In this embodiment of this application, historical page information in different applications on the remote device may be synchronized to the local device, so that the local device can quickly access to the historical page information in the different applications on the remote device. The local device may further control the remote device to quickly access to the historical page information in the different applications on the remote device, with no need to perform an operation on the remote device, and with no need to search the different applications on the remote device for historical page information in each of the different applications. This can simplify an operation of a user searching for historical page information in different applications, and speed up opening of historical pages in different applications, so that the historical pages in the different applications can be opened quickly, thereby helping improve user experience.

With reference to FIG. 1 and FIG. 2, FIG. 4, FIG. 11, and FIG. 12(a) to FIG. 12(c), the method for opening a historical page provided in embodiments of this application is described in detail below.

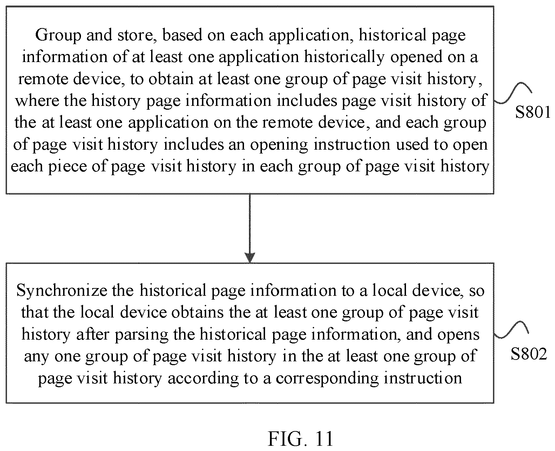

For example, FIG. 11 is a schematic diagram of a structure of a method for opening a historical page according to an embodiment of this application. The method may be applied to a remote device. As shown in FIG. 11, the method may include the following steps.

S801: Group and store, based on each application, historical page information of at least one application historically opened on the remote device, to obtain at least one group of page visit history, where the historical page information includes page visit history of the at least one application on the remote device, and each group of page visit history may include an opening instruction for opening each piece of page visit history in each group of page visit history.

In some embodiments, each time the remote device opens a new page in one application in the at least one application, one start activity (start activity) instruction may be generated. Page information of the new page is carried in the start activity instruction, and the page information of the new page includes an application name, a page component name, an additional parameter, and a page thumbnail that correspond to the new page. Optionally, the additional parameter may include at least a URL address of the new page. The remote device may store the page information of the new page based on the application and according to the start activity instruction, to obtain a group of page visit history. For example, with reference to FIG. 2 and FIG. 4, the remote device may send the generated start activity instruction to a task management module. The remote device may group and store, by using the task management module according to the start activity instruction, historical page information of at least one application historically opened on the remote device based on each application, to obtain at least one group of page visit history.

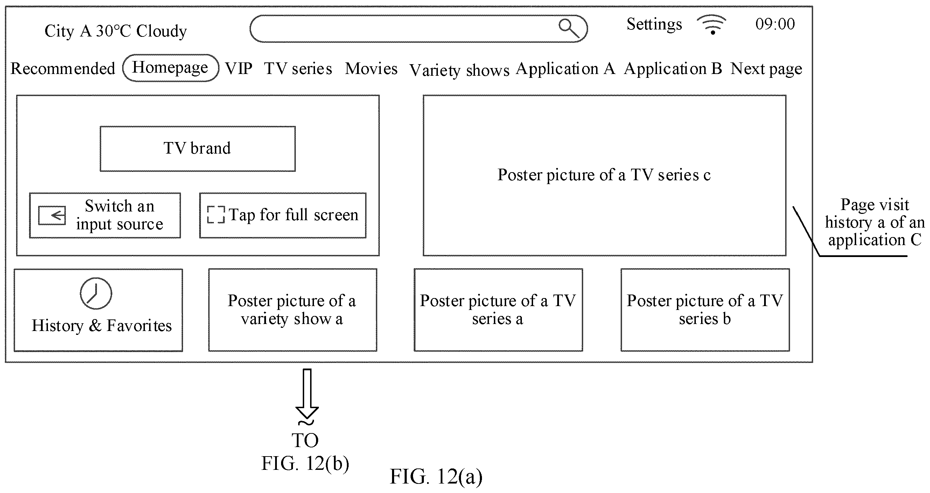

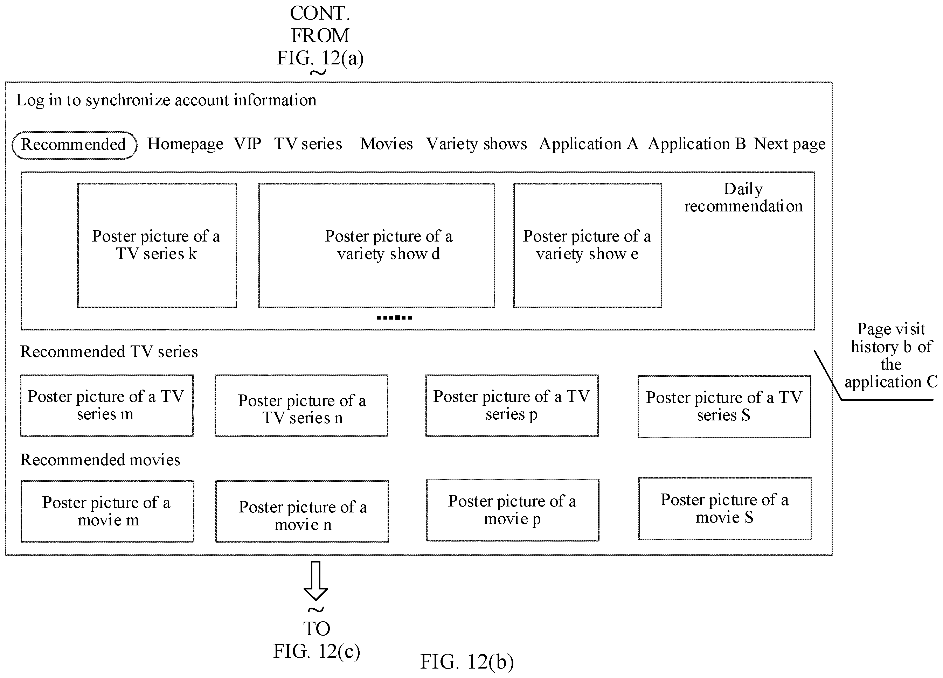

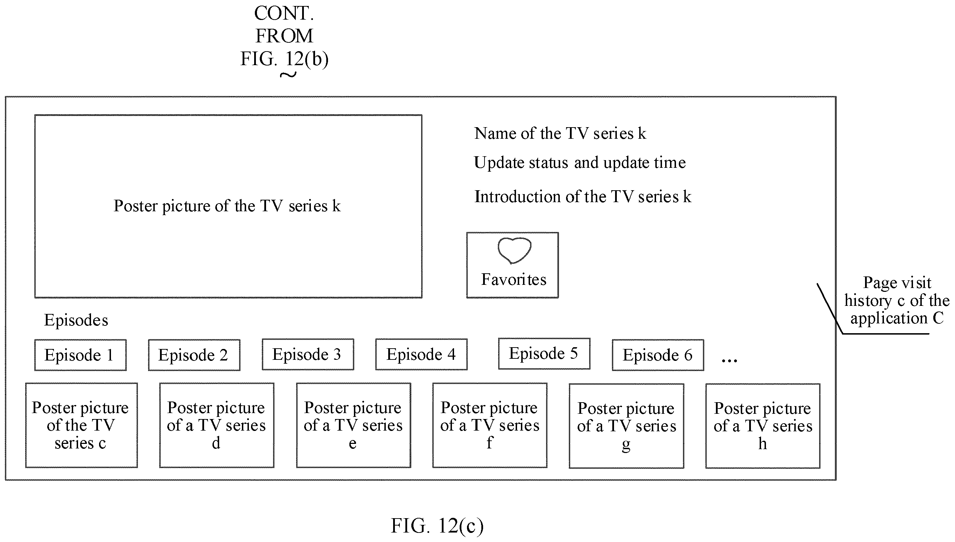

For example, with reference to FIG. 2, FIG. 4, and FIG. 12(a) to FIG. 12(c), that the remote device is a television and an application C are used as examples. When the remote device opens the application C and enters a homepage in the application C, the remote device may store, in a task storage module by using the task management module, the homepage in the application C as a piece of page visit history, that is, page visit history a (refer to FIG. 12(a)). When a user taps "Recommended" in the homepage, a recommendation interface in the application C may be entered. In this case, the remote device may store, in the task storage module by using the task management module, the recommendation page in the application C as a piece of page visit history, that is, page visit history b (refer to FIG. 12(b)). When the user taps a thumbnail of a poster picture of a television series k in the recommendation page, a details interface of the television series k may be entered. In this case, the remote device may store, in the task storage module by using the task management module, the details page for the television series k as a piece of page visit history, that is, page visit history c (refer to FIG. 12(c)). In a process in which the page visit history a, the page visit history b, and the page visit history c in the application C are stored in the task storage module, the remote device may further store thumbnails of content in the homepage, the recommendation page, and the details page for the television series k in the application C, and an opening instruction corresponding to each of the homepage, the recommendation page, and the details page for the television series k in the application C. Correspondingly, when the application C is closed and another application, for example, an application A and an application B are opened, the remote device may record, in a manner the same as or similar to that of recording page visit history of the application A, page visit history that has been opened in the another application on the remote device. Details are not described herein again.

For example, a data format of page visit history on the remote device may be a format JSON, or may be another format. This is not limited in this embodiment of this application. For example, the application C is Bilibili, and the data format JSON of the page history a in the application C may be as follows:

```
           {"packagename": "tv.danmaku.bili", //application package name
             "activities": {
                      "name": " tv.danmaku.bili.a (reference sign of
the name of the component for the page visit
                      history a in Bilibili)", //page component name
                      "flag": "normal", //page open mode
                      "data": "url:.....", //page additional data
                      "thumbnail": "a.jpg", //page content
thumbnail (thumbnail of the page history a shown in
                      FIG. 12(a)) },
 }
```

It should be noted that a manner in which the remote device stores the at least one group of page visit history may be storage by using a database, a cloud, or a local file. This is not limited in this embodiment of this application.

In this embodiment of this application, the remote device groups and stores, based on each application, the historical page information of the at least one application historically opened on the remote device, so that the remote device can be facilitated to manage page visit history of different applications. Further, a local device can be facilitated to synchronize the page visit history on the remote device subsequently.

S802: Synchronize the historical page information to the local device, so that the local device obtains the at least one group of page visit history after parsing the historical page information, and opens any one group of page visit history in the at least one group of page visit history according to a corresponding instruction.

In some embodiments, for a manner in which the remote device synchronizes the historical page information to the local device, refer to related descriptions in step S501 shown in FIG. 5. Details are not described herein again.

In some embodiments, when the remote device receives a first opening instruction, the remote device may parse the first opening instruction, and open a first group of page visit history in the at least one group of page visit history according to the parsed first opening instruction. Optionally, the first opening instruction may include a minimum set of information required for opening the first group of page visit history. For example, with reference to FIG. 2 and FIG. 4, the remote device may receive, by using a cross-device communications module, the first opening instruction sent by the local device. The cross-device communications module may parse the first opening instruction, and send the first opening instruction to the task management module. The task management module further parses the first opening instruction, to obtain the minimum set of information required for opening the first group of page visit history. Then, the remote device may open the first group of page visit history based on the minimum set of information required for opening the first group of page visit history.

In a process of specific implementation, the remote device may open the first group of page visit history according to the parsed first opening instruction in a start activity (start activity) manner, to update changed content of the first group of page visit history after the first group of page visit history is opened. The changed content of the first group of page visit history includes at least one deleted and/or added piece of page visit history in the first group of page visit history.

For example, still refer to FIG. 12(a) to FIG. 12(c). After the remote device opens the first group of page visit history, if the user enters a new page, one or more pieces of page visit history are added to the first group of page visit history. If the user does not need the page visit history a, the user can delete the page visit history a from the first group of page visit history.

In embodiments of this application, the first group of page visit history is updated in the start activity manner based on access of the remote device to a new page after the first opening instruction is received, so that a phenomenon that a part of page visit history on the remote device is missed can be avoided, thereby helping improve user experience.

In some embodiments, the remote device may further receive a second opening instruction sent by the local device. The remote device may parse the second opening instruction, and open a first piece of page visit history in the first group of page visit history according to the parsed second opening instruction. Optionally, the second opening instruction may include a minimum set of information required for opening the first piece of page visit history. For example, with reference to FIG. 2 and FIG. 4, the remote device may receive, by using the cross-device communications module, the second opening instruction sent by the local device. The cross-device communications module may parse the second opening instruction, and send the second opening instruction to the task management module. The task management module further parses the second opening instruction, to obtain the minimum set of information required for opening the first piece of page visit history in the first group of page visit history. Then, the remote device may open the first piece of page visit history based on the minimum set of information required for opening the first piece of page visit history.

In a process of specific implementation, the remote device may open the first piece of page visit history according to the parsed second opening instruction in a start activity manner, to update changed content information in the first group of page visit history after the first piece of page visit history is opened. The changed content information in the first group of page visit history includes content information corresponding to at least one added piece of page visit history to the first group of page visit history or at least one refreshed piece of page visit history in the first group of page visit history.

For example, still refer to FIG. 12(a) to FIG. 12(c). That the first piece of page visit history is the page visit history c is used as an example. If a user watched a part of video content of the episode 1 of the television series k, when the user taps a control "Episode 1" after the remote device opens the page visit history c, the user may continue to watch, on a display of the remote device, content that has not been played of the episode 1 of the television series k. In this case, the remote device may update content information corresponding to the first piece of page visit history, to update the changed content information in the first group of page visit history. Alternatively, when the user taps a thumbnail of a poster picture of a television series h in the page visit history, the remote device may enter a details page of the television series h. In this case, the remote device may add one piece of page visit history to the first group of page visit history.

In embodiments of this application, the first group of page visit history is updated in the start activity manner based on access of the remote device to a new page or continuous performing of non-completed content information in the first piece of page visit history after the second opening instruction is received, so that a phenomenon that a part of page visit history on the remote device is missed can be avoided, thereby helping improve user experience.

It should be noted that, when the remote device is a Bluetooth speaker, a manner in which the Bluetooth speaker stores each recently played track may be the same as or similar to the manner in which the remote device stores each group of page visit history. For a process of linkage between the Bluetooth speaker and the local device, refer to the foregoing related descriptions of the process of linkage between the remote device and the local device. Details are not described herein again.

In embodiments of this application, historical page information in different applications on the remote device is recorded and synchronized to the connected local device, so that the local device can quickly access to the historical page information in the different applications on the remote device. The local device may further control the remote device to quickly access to the historical page information in the different applications on the remote device, with no need to perform an operation on the remote device, and with no need to search the different applications on the remote device for history page information in each of the different applications. This can simplify an operation of a user searching for historical page information in different applications, and speed up opening of historical pages in different applications, so that the historical pages in the different applications can be opened quickly, thereby helping improve user experience.

It should be understood that, in embodiments of this application, the remote device and the local device may perform all or some of the steps in embodiments of this application. These steps are merely examples. In embodiments of this application, other steps or various variations of the steps may be further performed. In addition, the steps may be performed in different sequences presented in embodiments of this application, and not all the steps in embodiments of this application may need to be performed.

In embodiments of this application, unless otherwise specified or there is a logical conflict, terms and/or descriptions in different embodiments are consistent and may be mutual references. Technical features in different embodiments may be combined to form a new embodiment according to an internal logical relationship between the different embodiments.

The solutions provided in embodiments of this application are described above from the perspective of interaction between the local device and the remote device. It should be understood that, to implement the foregoing functions, the local device and the remote device include corresponding hardware structures and/or software modules for performing the functions. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, functional modules of the local device or the remote device may be divided according to the foregoing method examples. For example, each functional module may be obtained by division based on each corresponding function, or two or more functions may be integrated into one processing module. The integrated module may be implemented in a form of hardware, or may be implemented in a form of a software functional module. It should be noted that, in embodiments of this application, the division into the modules is an example and is merely logical function division, and may be other division in an actual implementation.

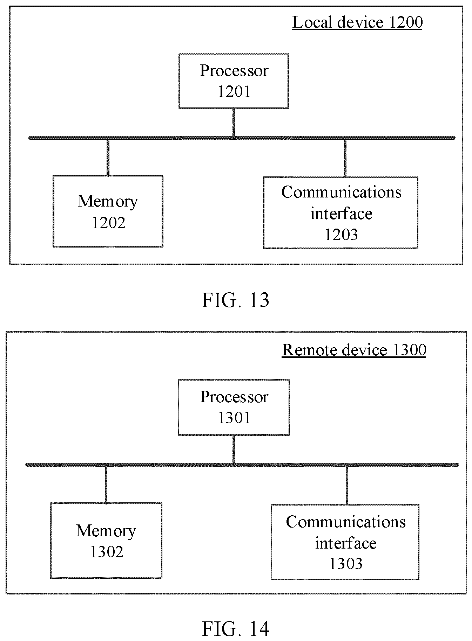

In a case in which an integrated unit (module) is used, FIG. 13 is a schematic diagram of a structure of a local device according to an embodiment of this application. As shown in FIG. 13, a local device 1200 may include at least one processor 1201 and memory 1202. The memory 1202 stores one or more computer programs, and for example, is configured to store one or more computer programs necessary for the local device 1200. The at least one processor 1201 is configured to support the local device 1200 to implement the foregoing method for opening a historical page. For example, when the one or more computer programs stored in the memory 1202 are executed by the at least one processor 1201, the local device 1200 can implement any possibility of the embodiment of the method for opening a historical page shown in FIG. 5; and/or is configured to implement another embodiment described in this specification. In addition, the local device 1200 may further include a communications interface 1203. The communications interface may be configured to communicate with another device or a communications network, for example, Ethernet, a RAN, a WLAN, or a wired access network.

In a case in which an integrated unit (module) is used, FIG. 14 is a schematic diagram of a structure of a remote device according to an embodiment of this application. As shown in FIG. 14, a remote device 1300 may include at least one processor 1301 and a memory 1302. The memory 1302 stores one or more computer programs, and for example, is configured to store one or more computer programs necessary for the remote device 1300. The at least one processor 1301 is configured to support the remote device 1300 to implement the foregoing method for opening a historical page. For example, when the one or more computer programs stored in the memory 1302 are executed by the at least one processor 1301, the remote device 1300 can implement any possibility of the embodiment of the method for opening a historical page shown in FIG. 8, and/or is configured to implement another embodiment described in this specification. In addition, the remote device 1300 may further include a communications interface 1303. The communications interface may be configured to communicate with another device or a communications network, for example, Ethernet, a RAN, a WLAN, or a wired access network.

Based on a same concept as that in the foregoing method embodiments, an embodiment of this application further provides a local device. The local device includes one or more processors, and one or more memories or non-volatile storage media. The one or more processors are connected to the one or more memories or non-volatile storage media. The one or more memories or non-volatile storage media store computer instructions or a computer program. The one or more processors execute the computer instructions or the computer program to implement any one possibility of embodiments of the method for opening a historical page shown in FIG. 5 and FIG. 8 and/or to implement other embodiments described in this specification.

Based on a same concept as that in the foregoing method embodiments, an embodiment of this application further provides a remote device. The remote device includes one or more processors, and one or more memories or non-volatile storage media. The one or more processors are connected to the one or more memories or non-volatile storage media. The one or more memories or non-volatile storage media store computer instructions or a computer program. The one or more processors execute the computer instructions or the computer program to implement any one possibility of embodiments of the method for opening a historical page shown in FIG. 5 and FIG. 8 and/or to implement other embodiments described in this specification.

Based on a same concept as that in the foregoing method embodiments, an embodiment of this application further provides a terminal device. The terminal device includes any one possibility of performing embodiments of the method for opening a historical page shown in FIG. 5 and FIG. 8, and/or is configured to implement modules/units in other embodiments described in this specification. These modules/units may be implemented by hardware, or may be implemented by hardware executing corresponding software.

Based on a same concept as that in the foregoing method embodiments, an embodiment of this application further provides a chip. The chip is coupled to a memory in a terminal device, is configured to invoke a computer program stored in the memory and perform any one possibility of embodiments of the method for opening a historical page shown in FIG. 5 and FIG. 8, and/or is configured to implement other embodiments described in this specification. In embodiments of this application, "coupled" means that two components are directly or indirectly combined with each other.

Based on a same concept as that in the foregoing method embodiments, an embodiment of this application further provides a graphical user interface on a terminal device. The terminal device has a display, one or more memories, and one or more processors. The one or more processors are configured to execute one or more computer programs stored in the one or more memories. The graphical user interface includes any one possibility of the terminal device performing the foregoing embodiments of the method for opening a historical page as shown in FIG. 5 and FIG. 8, and/or a graphical user interface displayed for implementing other embodiments described in this specification.

Based on a same concept as that in the foregoing method embodiments, an embodiment of this application further provides a computer-readable storage medium or a non-volatile storage medium. The computer-readable storage medium or the non-volatile storage medium stores computer instructions or a computer program. When the computer instructions or the computer program is run on a computer, the computer is enabled to execute the foregoing embodiments of the method for opening a historical page and any one of the possible implementations of embodiments. Alternatively, when the computer instructions or the computer program is run on the one or more processors, a local device including the one or more processors is enabled to perform the foregoing embodiments of the method for opening a historical page and any one of the possible implementations of embodiments, for example, perform any step in embodiments of the method for opening a historical page shown in FIG. 5 and FIG. 8, and/or perform another process of the technology described in this specification; or a remote device including the one or more processors is enabled to perform the foregoing embodiments of the method for opening a historical page or any one of the possible implementations of embodiments, for example, perform any step in embodiments of the method for opening a historical page shown in FIG. 5 and FIG. 8, and/or perform another process of the technology described in this specification.

Based on a same concept as that in the foregoing method embodiments, an embodiment of this application further provides a program product. The computer program product is configured to store a computer program. When the computer program is run on a computer, the computer is enabled to perform the foregoing embodiments of the method for opening a historical page or any one of the possible implementations of embodiments, for example, perform any step in embodiments of the method for opening a historical page as shown in FIG. 5 and FIG. 8, and/or perform another process of the technology described in this specification.

Based on a same concept as that in the foregoing method embodiments, an embodiment of this application further provides a chip. The chip may include at least one processor and an interface. The interface may be a code/data read/write interface, and the interface is configured to provide computer-executable instructions (the computer-executable instructions are stored in a memory, may be directly read from the memory, or may pass through another component) to the at least one processor. The at least one processor is configured to execute the computer-executable instructions, perform the foregoing embodiments of the method for opening a historical page and any one of the possible implementations of embodiments, for example, perform any step in embodiments of the method for opening a historical page shown in FIG. 5 and FIG. 8, and/or perform another process of the technology described in this specification.

Based on a same concept as that in the foregoing method embodiments, an embodiment of this application further provides a multi-device linkage system. The system includes a plurality of terminal devices. The plurality of devices include a terminal device used as a local device and a terminal device used as a remote device. The terminal device used as a local device is configured to perform all or some of the steps shown in FIG. 5 and FIG. 8, or steps performed by a local device in the solutions provided in embodiments of this application. The terminal device used as a remote device is configured to perform all or some of the steps shown in FIG. 5 and FIG. 8, or steps performed by a remote device in the solutions provided in embodiments of this application.

It should be understood that the processor (the processor or the processing unit shown in FIG. 13 and FIG. 14) in embodiments of this application may be an integrated circuit chip with a signal processing capability. During implementation, the steps in the foregoing embodiments of the method for opening a historical page as shown in FIG. 5 and FIG. 8 are implemented by using a hardware integrated logic circuit in the processor or processing unit or instructions in a form of software. The processor or the processing unit may be a programmable logic component, for example, digital signal processor (digital signal processor, DSP), an application-specific integrated circuit (application-specific integrated circuits, ASIC), a field programmable gate array (field programmable gate array, FPGA), or another programmable logic component, a transistor logic component, a hardware component, or any combination thereof; or may be a combination for implementing a computing function, for example, a combination including one or more microprocessors, a combination of a DSP and a microprocessor, or the like.

It should be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through examples but not limitative descriptions, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this application is intended to include, but is not limited to, these and any memory of another appropriate type.

Various illustrative logic units and circuits described in embodiments of this application may use a digital signal processor, an application-specific integrated circuit (application-specific integrated circuit, ASIC), a field programmable gate array (field programmable gate array, FPGA) or another programmable logic apparatus, a discrete gate or a transistor logic, a discrete hardware component, or any combination of the foregoing designs to implement or operate described functions. The general-purpose processor may be a microprocessor. Optionally, the general-purpose processor may alternatively be any conventional processor, controller, microcontroller, or state machine. The processor may alternatively be implemented by a combination of computing apparatuses, for example, a digital signal processor and a microprocessor, a plurality of microprocessors, one or more microprocessors in combination with a digital signal processor core, or any other similar configurations.

Steps of the method or algorithms described in embodiments of this application may be directly embedded into hardware, a software unit executed by a processor or a combination thereof. The software unit may be stored in a RAM, a flash memory, a ROM, an EPROM, an EEPROM, a register, a hard disk, a removable magnetic disk, a CD-ROM, or a storage medium of any other form in the art. For example, the storage medium may be connected to a processor, so that the processor can read information from the storage medium and write information into the storage medium. Optionally, the storage medium may alternatively be integrated into the processor. The processor and the storage medium may be disposed in an ASIC. The ASIC may be disposed in a communications device (for example, a local device or a remote device), for example, may be disposed in different components of the communications device.

All or some of the foregoing embodiments may be implemented by using software, hardware, firmware, or any combination thereof. When software is used for implementation, all or some of the embodiments may be implemented in a form of a computer program product. The computer program product includes one or more computer programs or instructions. When the computer program or instructions are loaded and executed on a computer, the procedures or the functions described in embodiments of this application are fully or partially performed. The computer may be a general-purpose computer, a dedicated computer, a computer network, or another programmable apparatus. The computer program or instructions may be stored in a computer-readable storage medium, or may be transmitted by using the computer-readable storage medium. The computer-readable storage medium may be any usable medium accessible by a computer, or a data storage device, for example, a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD), or the like.

Embodiments of this application are described with reference to the flowcharts and/or block diagrams of the method, the apparatus, and the computer program product used in embodiments. It should be understood that computer program instructions may be used to implement each procedure and/or each block in the flowcharts and/or the block diagrams and a combination of the procedure and/or the block in the flowcharts and/or the block diagrams. These computer program instructions may be provided to a general-purpose computer, a dedicated computer, an embedded processor or a processor of another programmable data processing device to generate a machine, so that the instructions are executed by the computer or the processor of the another programmable data processing device to generate an apparatus for implementing a specific function in one or more procedures in the flowcharts and/or in one or more blocks in the block diagrams.

The computer program instructions may alternatively be stored in a computer-readable memory that can guide the computer or the another programmable data processing device to work in a specific manner, so that the instructions stored in the computer-readable memory are used to generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device to generate computer-implemented processing. Therefore, the instructions executed on the computer or the another programmable device provide steps for implementing the specific function in one or more procedures in the flowcharts and/or in one or more blocks in the block diagrams.

Although embodiments of this application are described with reference to specific features, it is clear that various modifications and combinations may be made to them without departing from the spirit and scope of embodiments of this application. Correspondingly, this specification and the accompanying drawings are merely examples for describing embodiments of this application defined by the claims, and are considered as covering any of or all modifications, variations, combinations or equivalents within the scope of embodiments of this application.

## Claims

1. A method for opening a historical page, comprising:
receiving historical page information in a remote device sent by the remote device, and parsing the historical page information to obtain page visit history of at least one application, wherein the historical page information comprises the page visit history of the at least one application on the remote device;
grouping the page visit history of the at least one application based on each application, to obtain at least one group of page visit history, and storing the at least one group of page visit history, wherein each group of page visit history comprises an opening instruction used to open each piece of page visit history in each group of page visit history;
receiving a first instruction for viewing visit history, and opening, in response to the first instruction, a tab corresponding to the at least one group of page visit history; and
receiving a second instruction that is on the tab and that is used to open a first group of page visit history in the at least one group of page visit history, and opening the first group of page visit history and/or sending a first opening instruction to the remote device in response to the second instruction, so that the remote device opens the first group of page visit history according to the first opening instruction.

2. The method according to claim 1, wherein after the opening the first group of page visit history and/or sending a first opening instruction to the remote device in response to the second instruction, the method further comprises:
receiving a third instruction used to open a first piece of page visit history in the first group of page visit history; and
opening the first piece of page visit history in response to the third instruction if the first group of page visit history is opened on a local device; or
sending the second opening instruction to the remote device in response to the third instruction if the first group of page visit history is opened on the remote device, wherein the second opening instruction is used to control the remote device to open the first piece of page visit history; or
in response to the third instruction, opening the first piece of page visit history on a local device and sending the second opening instruction to the remote device if the first group of page visit history is opened on the local device and the remote device synchronously.

3. The method according to claim 1 or 2, wherein the opening the first group of page visit history and/or sending a first opening instruction to the remote device in response to the second instruction comprises:
in response to the second instruction, displaying, on the tab, a first control used to open the first group of page visit history on the local device, a second control used to open the first group of page visit history on the remote device, and a third control used to open the first group of page visit history on the local device and the remote device synchronously; and
opening the first group of page visit history on the local device if a first operation of tapping the first control is received; or
sending the first opening instruction to the remote device if a second operation of tapping the second control is received; or
opening the first group of page visit history on the local device and the remote device and sending the first opening instruction to the remote device if a third operation of tapping the third control is received.

4. The method according to claim 3, wherein after the storing the at least one group of page visit history, the method further comprises:
determining whether storage space currently used to store the at least one group of page visit history has reached a preset threshold; and
deleting at least one piece of earliest page visit history from the at least one group of page visit history when the storage space has reached the preset threshold.

5. The method according to claim 3, wherein the storing the at least one group of page visit history comprises:
storing at least one piece of page visit history in the at least one group of page visit history, wherein the at least one piece of page visit history is page visit history in the at least one group of page visit history, and a duration interval between a time of the page visit history and a current time is less than or equal to preset duration and/or a time of the page visit history is within a preset time.

6. The method according to any one of claims 1 to 5, wherein a first preset operation is performed on the tab to switch between groups of page visit history in the at least one group of page visit history, and the first preset operation comprises at least a left/right flick operation; and
if a second group of page visit history in the at least one group of page visit history is currently displayed on the tab, a second preset operation is performed on the tab to switch between pieces of page visit history in the second group of page visit history, and the second preset operation comprises at least an up/down flick operation.

7. The method according to claim 6, wherein before the opening the first group of page visit history and/or sending a first opening instruction to the remote device in response to the second instruction, the method further comprises:
determining that a first application corresponding to the first group of page visit history is not installed on the local device;
outputting first prompt information, used to prompt the local device that the first application needs to be installed, wherein the first prompt information comprises an installation instruction; and
in response to the installation instruction, starting to install the first application on the local device.

8. The method according to any one of claims 1 to 7, wherein the first opening instruction comprises a minimum set of information required for opening the first group of page visit history, and the second opening instruction comprises a minimum set of information required for opening the first piece of page visit history.

9. A method for opening a historical page, comprising:
grouping and storing, based on each application, historical page information of at least one application historically opened on a remote device, to obtain at least one group of page visit history, wherein the historical page information comprises page visit history of the at least one application on the remote device, and each group of page visit history comprises an opening instruction used to open each piece of page visit history in each group of page visit history; and
synchronizing the historical page information to a local device, so that the local device obtains the at least one group of page visit history after parsing the historical page information, and opens any one group of page visit history in the at least one group of page visit history according to a corresponding instruction.

10. The method according to claim 9, wherein before the grouping and storing, based on each application, historical page information of at least one application historically opened on a remote device, to obtain at least one group of page visit history, the method further comprises:
generating one start activity instruction each time a new page in one application in the at least one application is opened, wherein page information of the new page is carried in the start activity instruction, and the page information of the new page comprises an application name, a page component name, an additional parameter, and a page thumbnail that correspond to the new page; and
storing the page information of the new page based on the application and according to the start activity instruction, to obtain a group of page visit history.

11. The method according to claim 9 or 10, wherein after the synchronizing the historical page information to a local device, the method further comprises:
receiving a first opening instruction sent by the local device; and
parsing the first opening instruction, and opening a first group of page visit history in the at least one group of page visit history according to the parsed first opening instruction.

12. The method according to claim 11, wherein after the receiving a first opening instruction sent by the local device, the method further comprises:
receiving a second opening instruction sent by the local device; and
parsing the second opening instruction, and opening a first piece of page visit history in the first group of page visit history according to the parsed second opening instruction.

13. The method according to claim 11, wherein the opening a first group of page visit history in the at least one group of page visit history according to the parsed first opening instruction comprises:
opening, according to the parsed first opening instruction, the first group of page visit history in a start activity manner, to update changed content of the first group of page visit history after the first group of page visit history is opened, wherein the changed content of the first group of page visit history comprises at least one deleted and/or added piece of page visit history in the first group of page visit history.

14. The method according to claim 12, wherein the opening a first piece of page visit history in the first group of page visit history according to the parsed second opening instruction comprises:
opening, according to the parsed second opening instruction, the first piece of page visit history in a start activity manner, to update changed content information in the first group of page visit history after the first piece of page visit history is opened, wherein the changed content information in the first group of page visit history comprises at least one added piece of page visit history in the first group of page visit history or content information corresponding to at least one refreshed piece of page visit history in the first group of page visit history.

15. The method according to any one of claims 9 to 14, wherein the first opening instruction comprises a minimum set of information required for opening the first group of page visit history, and the second opening instruction comprises a minimum set of information required for opening the first piece of page visit history.

16. A local device, comprising:
one or more processors; and
one or more memories, wherein
the one or more memories store one or more computer programs, the one or more computer programs comprise instructions, and when the instructions are executed by the one or more processors, the local device is enabled to perform the following steps:
receiving historical page information in a remote device sent by the remote device, and parsing the historical page information to obtain page visit history of at least one application, wherein the historical page information comprises the page visit history of the at least one application on the remote device;
grouping the page visit history of the at least one application based on each application, to obtain at least one group of page visit history, and storing the at least one group of page visit history, wherein each group of page visit history comprises an opening instruction used to open each piece of page visit history in each group of page visit history;
receiving a first instruction for viewing visit history, and opening, in response to the first instruction, a tab corresponding to the at least one group of page visit history; and
receiving a second instruction that is on the tab and that is used to open a first group of page visit history in the at least one group of page visit history, and opening the first group of page visit history and/or sending a first opening instruction to the remote device in response to the second instruction, so that the remote device opens the first group of page visit history according to the first opening instruction.

17. The local device according to claim 16, wherein when the instructions are executed by the one or more processors, the local device is enabled to specifically perform the following steps:
receiving a third instruction used to open a first piece of page visit history in the first group of page visit history; and
opening the first piece of page visit history in response to the third instruction if the first group of page visit history is opened on the local device; or
sending the second opening instruction to the remote device in response to the third instruction if the first group of page visit history is opened on the remote device, wherein the second opening instruction is used to control the remote device to open the first piece of page visit history; or
in response to the third instruction, opening the first piece of page visit history on a local device and sending the second opening instruction to the remote device if the first group of page visit history is opened on the local device and the remote device synchronously.

18. The local device according to claim 16 or 17, wherein when the instructions are executed by the one or more processors, the local device is enabled to specifically perform the following steps:
in response to the second instruction, displaying, on the tab, a first control used to open the first group of page visit history on the local device, a second control used to open the first group of page visit history on the remote device, and a third control used to open the first group of page visit history on the local device and the remote device synchronously; and
opening the first group of page visit history on the local device if a first operation of tapping the first control is received; or
sending the first opening instruction to the remote device if a second operation of tapping the second control is received; or
opening the first group of page visit history on the local device and the remote device and sending the first opening instruction to the remote device if a third operation of tapping the third control is received.

19. The local device according to claim 18, wherein when the instructions are executed by the one or more processors, the local device is enabled to further perform the following steps:
determining whether storage space currently used to store the at least one group of page visit history has reached a preset threshold; and
deleting at least one piece of earliest page visit history from the at least one group of page visit history when the storage space has reached the preset threshold.

20. The local device according to claim 18, wherein when the instructions are executed by the one or more processors, the local device is enabled to specifically perform the following steps:
storing at least one piece of page visit history in the at least one group of page visit history, wherein the at least one piece of page visit history is page visit history in the at least one group of page visit history, and a duration interval between a time of the page visit history and a current time is less than or equal to preset duration and/or a time of the page visit history is within a preset time.

21. The local device according to any one of claims 16 to 20, wherein when the instructions are executed by the one or more processors, the local device is enabled to specifically perform the following steps:
performing a first preset operation on the tab to switch between groups of page visit history in the at least one group of page visit history, wherein the first preset operation comprises at least a left/right flick operation; and
if a second group of page visit history in the at least one group of page visit history is currently displayed on the tab, performing a second preset operation on the tab to switch between pieces of page visit history in the second group of page visit history, wherein the second preset operation comprises at least an up/down flick operation.

22. The local device according to claim 21, wherein when the instructions are executed by the one or more processors, the local device is enabled to specifically perform the following steps:
determining that a first application corresponding to the first group of page visit history is not installed on the local device;
outputting first prompt information, used to prompt the local device that the first application needs to be installed, wherein the first prompt information comprises an installation instruction; and
in response to the installation instruction, starting to install the first application on the local device.

23. A remote device, comprising:
one or more processors; and
one or more memories, wherein
the one or more memories store one or more computer programs, the one or more computer programs comprise instructions, and when the instructions are executed by the one or more processors, the remote device is enabled to perform the following steps:
grouping and storing, based on each application, historical page information of at least one application historically opened on the remote device, to obtain at least one group of page visit history, wherein the historical page information comprises page visit history of the at least one application on the remote device, and each group of page visit history comprises an opening instruction used to open each piece of page visit history in each group of page visit history; and
synchronizing the historical page information to a local device, so that the local device obtains the at least one group of page visit history after parsing the historical page information, and opens any one group of page visit history in the at least one group of page visit history according to a corresponding instruction.

24. The remote device according to claim 23, wherein when the instructions are executed by the one or more processors, the remote device is enabled to specifically perform the following steps:
generating one start activity instruction each time a new page in one application in the at least one application is opened, wherein page information of the new page is carried in the start activity instruction, and the page information of the new page comprises an application name, a page component name, an additional parameter, and a page thumbnail that correspond to the new page; and
storing the page information of the new page based on the application and according to the start activity instruction, to obtain a group of page visit history.

25. The remote device according to claim 23 or 24, wherein when the instruction are executed by the one or more processors, the remote device is enabled to specifically perform the following steps:
receiving a first opening instruction sent by the local device; and
parsing the first opening instruction, and opening a first group of page visit history in the at least one group of page visit history according to the parsed first opening instruction.

26. The remote device according to claim 25, wherein when the instructions are executed by the one or more processors, the remote device is enabled to specifically perform the following steps:
receiving a second opening instruction sent by the local device; and
parsing the second opening instruction, and opening a first piece of page visit history in the first group of page visit history according to the parsed second opening instruction.

27. The remote device according to claim 25, wherein when the instructions are executed by the one or more processors, the remote device is enabled to specifically perform the following steps:
opening, according to the parsed first opening instruction, the first group of page visit history in a start activity manner, to update changed content of the first group of page visit history after the first group of page visit history is opened, wherein the changed content of the first group of page visit history comprises at least one deleted and/or added piece of page visit history in the first group of page visit history.

28. The remote device according to claim 26, wherein when the instructions are executed by the one or more processors, the remote device is enabled to specifically perform the following steps:
opening, according to the parsed second opening instruction, the first piece of page visit history in a start activity manner, to update changed content information in the first group of page visit history after the first piece of page visit history is opened, wherein the changed content information in the first group of page visit history comprises at least one added piece of page visit history in the first group of page visit history or content information corresponding to at least one refreshed piece of page visit history in the first group of page visit history.

29. A computer storage medium, wherein the computer-readable storage medium is configured to store a computer program, and when the computer program is run on a computer, the computer is enabled to perform the method according to any one of claims 1 to 8, or the computer is enabled to perform the method according to any one of claims 9 to 15.

30. A graphical user interface on a terminal device, wherein the terminal device has a display, one or more memories, and one or more processors, the one or more processors are configured to execute one or more computer programs stored in the one or more memories, and the graphical user interface comprises a graphical user interface displayed when the terminal device performs the method according to any one of claims 1 to 8 or the method according to any one of claims 9 to 15.
